# FASCICULE DE BREVET EUROPEEN

(11) **EP 3 877 165 B1**
(45) Date de publication et mention de la délivrance du brevet: **25.01.2023**
(21) Numéro de dépôt: 19820828.2
(22) Date de dépôt: 06.11.2019
(51) Int. Cl.: B29D 30/20, B29D 30/02, B29D 30/06, B60C 9/02

(54) **PROCEDE DE FABRICATION ANTI-RELAXATION D'UN PNEUMATIQUE**
LOCKERUNGSSCHUTZVERFAHREN ZUR HERSTELLUNG EINES REIFENS
ANTI-RELAXATION METHOD FOR MANUFACTURING A TYRE

(30) Priorité: 09.11.2018 FR 1860335
(43) Date de publication de la demande: 15.09.2021
(73) Titulaire: COMPAGNIE GENERALE DES ETABLISSEMENTS MICHELIN, 63000 Clermont-Ferrand (FR)
(72) Inventeur: BROUSSEAU, Magaly, 63040 Clermont-Ferrand Cedex 9 (FR); HUG, Gregor, 63040 Clermont-Ferrand Cedex 9 (FR); LIMOZIN, Bastien, 63040 Clermont-Ferrand Cedex 9 (FR); RIGO, Sébastien, 63040 Clermont-Ferrand Cedex 9 (FR)
(74) Mandataire: Louret, Sylvain
(86) Numéro de dépôt international: PCT/FR2019/052637
(87) Numéro de publication internationale: WO 2020/094985

(56) Documents cités:
- WO-A1-2016/116491
- US-A1- 2007 137 752

## Description

L'invention a pour objet un procédé de fabrication d'un pneumatique.

L'invention concerne le domaine des pneumatiques destinés à équiper des véhicules. Le pneumatique est conçu préférentiellement pour des véhicules de tourisme, mais peut être utilisé sur tout autre type de véhicule tels que des véhicules à deux roues, des véhicules poids lourds, agricoles, de génie civil ou des avions ou, plus généralement, sur tout dispositif roulant.

On connait du document WO 2018/130785 un pneumatique permettant une mise à plat améliorée de la bande de roulement lorsque le pneumatique est soumis à une charge et qui soit facile à fabriquer à partir d'un assemblage adapté. En particulier, WO 2018/130785 décrit un pneumatique de révolution autour d'un axe et comprenant un assemblage comprenant :
- une première structure de révolution comprenant une première structure de premiers éléments filaires,
- une deuxième structure de révolution comprenant une deuxième structure de deuxièmes éléments filaires, la deuxième structure de révolution étant agencée radialement à l'intérieur de la première structure de révolution,
- une structure porteuse comprenant des éléments filaires porteurs textiles reliant la première structure de premiers éléments filaires et la deuxième structure de deuxièmes éléments filaires entre elles, chaque élément filaire porteur textile comprenant au moins une portion filaire porteuse textile s'étendant entre la première structure de premiers éléments filaires et la deuxième structure de deuxièmes éléments filaires.

Afin de fabriquer le pneumatique, WO 2018/130785 décrit un procédé comprenant une étape d'assemblage d'une ébauche crue du pneumatique durant laquelle on utilise l'assemblage pour former au moins une partie de l'ébauche crue du pneumatique. Ainsi, on enroule l'assemblage décrit autour d'un support d'assemblage sensiblement de révolution. Puis, durant l'étape d'assemblage de l'ébauche crue du pneumatique, on forme un espace annulaire intérieur délimité radialement par une face interne de la première structure de révolution et une face interne de la deuxième structure de révolution, par exemple par pressurisation d'une cavité fermée formée au moins en partie par l'espace annulaire intérieur. Cette étape est généralement appelée conformation du pneumatique. Puis, toujours durant l'étape d'assemblage de l'ébauche crue du pneumatique, on assemble une structure de révolution de sommet radialement à l'extérieur de la première structure de révolution. Puis, le procédé comprend une étape de chauffage de l'ébauche crue de façon à faire réticuler au moins en partie d'ébauche crue, par exemple par vulcanisation, afin d'obtenir le pneumatique à l'état cuit.

Toutefois, en mettant en oeuvre le procédé décrit dans WO 2018/130785, on a remarqué que certaines propriétés réelles du pneumatique fabriqué différaient des propriétés attendues. En particulier, on a noté que les propriétés mécaniques réelles, notamment les propriétés réelles de module des éléments filaires porteurs textiles et plus précisément des portions filaires porteuses textiles différaient des propriétés attendues. De telles différences entrainent des modifications des performances du pneumatique, notamment des performances de bruit, qui en plus d'être néfastes, sont d'une amplitude relativement variable et imprévisible.

L'invention a pour but de supprimer les différences entre les performances attendues et les performances réelles du pneumatique.

A cet effet, l'invention a pour objet un procédé de fabrication d'un pneumatique comprenant :
- une étape d'assemblage d'une ébauche crue du pneumatique durant laquelle on enroule, autour d'un support d'assemblage sensiblement de révolution autour d'un axe de révolution, un assemblage selon la direction circonférentielle du support d'assemblage, l'assemblage comprenant :
   ∘ une première structure de premiers éléments filaires,
   ∘ une deuxième structure de deuxièmes éléments filaires, la deuxième structure de deuxièmes éléments filaires étant agencée radialement à l'intérieur de la première structure de premiers éléments filaires,
   ∘ une structure porteuse comprenant des éléments filaires porteurs textiles reliant la première structure de premiers éléments filaires et la deuxième structure de deuxièmes éléments filaires entre elles, chaque élément filaire porteur textile comprenant au moins une portion filaire porteuse textile s'étendant entre la première structure de premiers éléments filaires et la deuxième structure de deuxièmes éléments filaires,
- une étape de moulage de l'ébauche crue assemblée du pneumatique durant laquelle on écarte radialement la première structure de premiers éléments filaires par rapport à la deuxième structure de deuxièmes éléments filaires, et
- une étape de chauffage de l'ébauche crue moulée du pneumatique de façon à faire réticuler au moins en partie l'ébauche crue moulée du pneumatique,
procédé dans lequel, durant l'étape de chauffage de l'ébauche crue moulée du pneumatique, la tension dans chaque portion filaire porteuse textile est nulle.

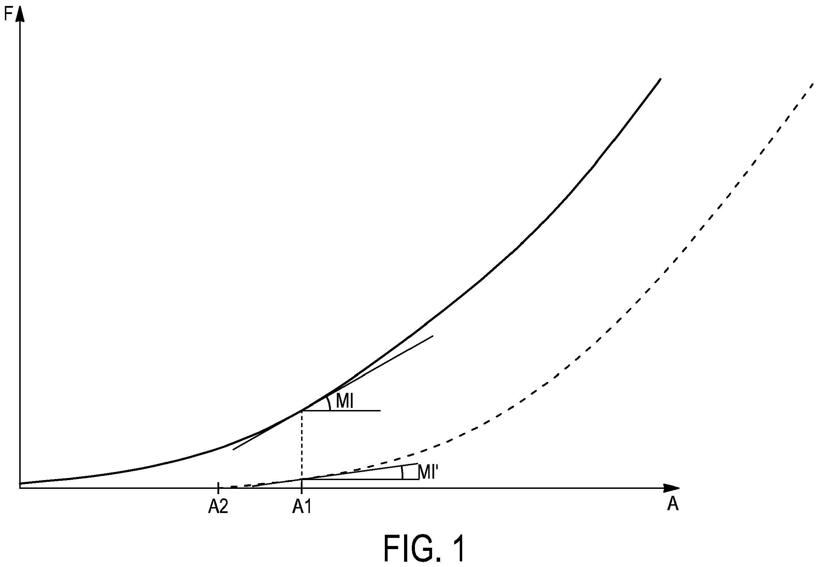

Grâce à l'invention, le pneumatique ne présente plus de différences entre les performances attendues et les performances réelles du pneumatique. En effet, les inventeurs à l'origine de l'invention ont découvert que, lors de l'étape de chauffage, si une tension était présente dans chaque portion filaire porteuse textile, on entrainait une relaxation du ou des matériaux constitutifs de chaque portion filaire porteuse textile comme cela est expliqué en référence à la figure 1 ci-après et donc des différences entre les performances attendues et les performances réelles du pneumatique. Le procédé permet donc d'éviter toute relaxation de chaque portion filaire porteuse textile.

Sur cette figure 1, on a représenté une courbe force-allongement d'une portion filaire porteuse textile avant l'étape de chauffage (en trait continu) et une courbe force allongement de la même portion filaire porteuse textile après l'étape de chauffage sous une tension non nulle (en trait discontinus) ayant subi une relaxation du ou de ces matériaux constitutifs.

On comprend que, pour un allongement A1 attendu de la portion filaire porteuse textile au sein du pneumatique en roulage, le module attendu de la portion filaire porteuse textile est M1.

Néanmoins, si, lors de l'étape de chauffage, on applique à la portion filaire porteuse textile une tension entrainant un allongement A2 de la portion filaire porteuse textile, du fait de la relaxation, l'origine de la courbe force-allongement de la portion filaire porteuse textile se décale à l'allongement A2. En conséquence, avec une portion filaire porteuse textile relaxée, pour un allongement A1 réel au sein du pneumatique en roulage, le module réel M1' est différent du module M1, ce qui explique les différences entre les performances attendues et les performances réelles du pneumatique.

Le procédé selon l'invention comprend une étape de chauffage de l'ébauche crue préalablement formée. L'étape de chauffage peut débuter pendant l'étape de moulage de sorte que l'étape de chauffage permet de chauffer l'ébauche préalablement formée en cours de moulage et l'ébauche préalablement formée moulée. L'étape de chauffage peut débuter après la fin de l'étape de moulage de sorte que l'étape de chauffage permet de chauffer l'ébauche préalablement formée moulée. Dans les deux cas, l'étape de chauffage permet de faire chauffer et réticuler au moins en partie l'ébauche crue moulée du pneumatique.

Le principe de l'assemblage est d'avoir une structure porteuse comprenant des éléments porteurs reliant la première structure de premiers éléments filaires et la deuxième structure de deuxièmes éléments filaires, et capable, une fois l'assemblage agencé dans le pneumatique, de porter la charge appliquée au pneumatique par la mise en tension d'une partie des éléments porteurs positionnés en dehors de l'aire de contact, les éléments porteurs positionnés dans l'aire de contact étant soumis à un flambage car soumis à un effort de compression et ne participant donc pas au port de la charge appliquée.

Par élément filaire porteur, on entend tout élément longiligne de grande longueur relativement à sa section transversale, quelle que soit la forme de cette dernière, par exemple circulaire, oblongue, rectangulaire ou carrée, ou même plate, cet élément filaire pouvant être par exemple torsadé ou ondulé. Lorsqu'il est de forme circulaire, son diamètre est de préférence inférieur à 5 mm, plus préférentiellement compris dans un domaine allant de 100 µm à 1,2 mm.

L'assemblage utilisé dans le procédé selon l'invention peut être écru, c'est-à-dire dépourvu de toute composition adhésive destinée à favoriser l'adhésion entres les premiers et/ou deuxièmes éléments filaires avec une composition d'élastomère. L'assemblage utilisé dans le procédé selon l'invention peut également être adhérisé, c'est-à-dire revêtu au moins en partie d'au moins une composition adhésive favorisant une telle adhésion. Dans un mode de réalisation à deux couches, chaque premier et deuxième élément filaire à encoller est revêtu d'une couche d'un primaire d'adhésion et la couche de primaire d'adhésion est revêtue d'une couche de composition adhésive. Dans un mode de réalisation à une couche, chaque premier et deuxième élément filaire à encoller est directement revêtu d'une couche de composition adhésive. Un exemple de primaire d'adhésion est une résine époxy et/ou un composé isocyanate, éventuellement bloqué. La composition adhésive utilisée pourra être une colle RFL classique (Résorcinol-formaldéhyde-latex) ou bien encore les colles décrites dans les demandes WO 2013/017421, WO 2013/017422, WO 2013/017423, WO2015007641 et WO2015007642.

Un élément porteur filaire a un comportement mécanique de type filaire, c'est-à-dire qu'il ne peut être soumis qu'à des efforts d'extension ou de compression selon sa ligne moyenne.

Dans un mode de réalisation préféré, la structure porteuse comprend une pluralité d'éléments porteurs identiques, c'est-à-dire dont les caractéristiques géométriques et les matériaux constitutifs sont identiques.

Les éléments porteurs sont agencés de sorte qu'ils sont deux à deux non liés mécaniquement dans un espace délimité par les première et deuxième structures respectivement de premiers et deuxièmes éléments filaires. Ainsi, les éléments porteurs ont des comportements mécaniques indépendants. Par exemple, les éléments porteurs ne sont pas liés entre eux de façon à former un réseau ou un treillis.

Par textile, on entend que chaque élément filaire porteur et chaque portion filaire porteuse textile est non métallique, et est par exemple réalisé dans un matériau choisi parmi un polyester, un polyamide, une polycétone, un polyuréthanne, un alcool polyvinylique, une cellulose, une fibre minérale, une fibre naturelle, un matériau élastomérique ou un mélange de ces matériaux. Parmi les polyesters on citera par exemple les PET (polyéthylène téréphthalate), PEN (polyéthylène naphthalate), PBT (polybutylène téréphthalate), PBN (polybutylène naphthalate), PPT (polypropylène téréphthalate), PPN (polypropylène naphthalate). Parmi les polyamides, on citera les polyamides aliphatiques tels que les polyamides 4-6, 6, 6-6 (nylon), 11 ou 12 et les polyamides aromatiques tels que l'aramide. Parmi les polyuréthannes, on citera notamment les élasthannes.

Par exemple, chaque élément filaire porteur et chaque portion filaire porteuse textile est un assemblage textile comprenant une ou plusieurs fibres mono-filamentaire ou multi-filamentaires textiles, retordues ensemble ou non. Ainsi, dans un mode de réalisation, on pourra avoir un assemblage dans lequel les fibres sont sensiblement parallèles les unes aux autres. Dans un autre mode de réalisation, on pourra avoir également un assemblage dans lequel les fibres sont enroulées en hélice. Dans encore un autre mode de réalisation, chaque élément filaire porteur et chaque portion filaire porteuse textile est constitué d'un monofilament. Chaque fibre mono-filamentaire ou multi-filamentaire présente un diamètre compris entre 5 et 20 µm, par exemple 10 µm.

Dans la présente demande, lorsqu'on fait référence à l'ébauche crue préalablement formée, on fait référence à une ébauche crue en cours de formation et obtenue juste avant l'étape considérée. Ainsi, l'ébauche crue finale est l'ébauche crue obtenue juste avant l'étape de chauffage permettant de réticuler au moins en partie l'ébauche pour la faire passer d'un état cru à un état réticulé, ici dans un état cuit.

Par crue, on entend une ébauche comprenant au moins une partie réticulable se trouvant dans un état non réticulé. Par exemple, une telle partie réticulable peut être une composition réticulable comprenant un élastomère, une charge et un système de réticulation.

Dans un mode de réalisation, la longueur de chaque portion filaire porteuse textile ne varie pas durant l'étape de chauffage de l'ébauche crue du pneumatique.

Dans un autre mode de réalisation, la longueur de chaque portion filaire porteuse textile diminue durant l'étape de chauffage de l'ébauche crue du pneumatique. Une telle diminution de la longueur de chaque portion filaire est par exemple due à la contraction thermique du ou des matériaux constitutifs des portions filaires porteuses.

Dans un mode de réalisation préféré, durant l'étape de chauffage de l'ébauche crue du pneumatique, chaque portion filaire porteuse textile est dans un état plié. Dans ce mode de réalisation préféré, la distance droite entre chaque couple de points de la première structure de premiers éléments filaires et de la deuxième structure de deuxièmes éléments filaires reliés entre eux par une portion filaire porteuse textile est inférieure à la longueur à vide de chaque portion filaire porteuse textile. De ce fait, chaque portion filaire porteuse textile est nécessairement non tendue.

Dans un autre mode de réalisation, chaque portion filaire porteuse textile est dans un état sensiblement rectiligne sans pour autant être tendue. Ainsi, dans cet autre mode de réalisation, la distance droite entre chaque couple de points de la première structure de premiers éléments filaires et de la deuxième structure de deuxièmes éléments filaires reliés entre eux par une portion filaire porteuse textile est sensiblement égale à la longueur à vide de chaque portion filaire porteuse textile.

Dans un mode de réalisation, le pneumatique est tel que, gonflé à une pression nominale P et écrasé sous une charge radiale nominale Z sur un sol, la portion filaire porteuse textile d'au moins une partie de chaque élément filaire porteur textile situé diamétralement à l'opposé de l'aire de contact, est dans un état tendu. Ainsi, chaque portion filaire porteuse textile de chaque élément filaire porteur textile situé diamétralement à l'opposé de l'aire de contact présente les propriétés attendues entrainant les performances également attendues pour le pneumatique et conférées par ces portions filaires porteuses textiles.

Avantageusement, durant l'étape d'assemblage, la tension dans chaque portion filaire porteuse textile est nulle. Ainsi, on assemble l'ébauche crue sans qu'aucune contrainte ne vienne s'appliquer entre les première et deuxième structures de révolution ce qui permet de réduire le risque de détérioration de l'ébauche crue en cours de formation.

Dans un mode de réalisation préféré, durant l'étape d'assemblage, on forme un espace annulaire intérieur délimité radialement au moins en partie par une face interne d'une première structure de révolution comprenant la première structure de premiers éléments filaires et au moins en partie par une face interne d'une deuxième structure de révolution comprenant la deuxième structure de deuxièmes éléments filaires en écartant radialement la première structure de révolution par rapport à la deuxième structure de révolution de sorte que la tension dans chaque portion filaire porteuse textile est nulle lors de l'écartement radial de la première structure de révolution par rapport à la deuxième structure de révolution. Ainsi, on évite de détériorer l'ébauche crue durant la formation de l'espace annulaire intérieur.

Avantageusement, durant l'étape d'assemblage:
- on pressurise une cavité fermée formée au moins en partie par l'espace annulaire intérieur de façon à écarter radialement la première structure de révolution par rapport à la deuxième structure de révolution, et
- on limite l'écartement radial de la première structure de révolution par rapport à la deuxième structure de révolution,
de sorte que la tension dans chaque portion filaire porteuse textile est nulle.

Ainsi, on permet la création d'une forme torique sur laquelle on pourra effectuer l'assemblage d'autres éléments du pneumatique sans pour autant risquer de détériorer l'assemblage et l'ébauche crue alors formée en tendant chaque portion filaire porteuse textile.

Dans des modes de réalisation, durant l'étape d'assemblage, on assemble une structure de révolution de sommet radialement à l'extérieur de la première structure de révolution. De façon préférée, durant l'étape d'assemblage, on limite l'écartement radial de la première structure de révolution par rapport à la deuxième structure de révolution en plaquant :
- une surface radialement externe de l'ébauche crue préalablement formée contre une surface radialement interne de la structure de révolution de sommet, et
- une surface radialement interne de l'ébauche crue préalablement formée contre une surface radialement externe du support d'assemblage de l'ébauche crue.

Ainsi, la structure de révolution de sommet permet de contraindre radialement la première structure de révolution et le support d'assemblage permet de contraindre la deuxième structure de révolution de sorte que chaque portion filaire porteuse textile demeure non tendue lors de l'étape d'assemblage de la structure de révolution de sommet.

On assemble la structure de révolution de sommet sur l'ébauche préalablement formée de sorte que la distance droite entre chaque couple de points de la première structure de révolution et de la deuxième structure de révolution reliés entre eux par une portion filaire porteuse textile soit inférieure ou égale à la longueur à vide de chaque portion filaire porteuse textile. En d'autres termes, la structure de révolution de sommet et le support d'assemblage assurent les fonctions de butées radiales de l'ébauche préalablement formée lors de la formation de l'espace annulaire intérieur.

Dans un mode de réalisation préféré, durant l'étape de moulage:
- on pressurise une cavité fermée formée au moins en partie par l'espace annulaire intérieur de façon à écarter radialement la première structure de révolution par rapport à la deuxième structure de révolution, et
- on limite l'écartement radial de la première structure de révolution par rapport à la deuxième structure de révolution
de sorte que la tension dans chaque portion filaire porteuse textile est nulle.

Ainsi, on permet le moulage des différentes sculptures du pneumatique sans pour autant risquer de détériorer l'assemblage et l'ébauche crue alors formée en tendant chaque portion filaire porteuse textile.

De façon préférée, durant l'étape de moulage, on limite l'écartement radial de la première structure de révolution par rapport à la deuxième structure de révolution en plaquant :
- une surface radialement externe de l'ébauche crue préalablement formée contre une face intérieure radialement externe d'un moule, et
- une surface radialement interne de l'ébauche crue préalablement formée contre une face intérieure radialement interne du moule.

Ainsi, le moule permet de contraindre radialement les structures de révolution de sorte que chaque portion filaire porteuse textile demeure non tendue lors de l'étape de moulage. On plaque les surfaces radialement interne et externe de l'ébauche crue préalablement formée contre les faces intérieures du moule de sorte que la distance droite entre chaque couple de points de la première structure de révolution et de la deuxième structure de révolution reliés entre eux par une portion filaire porteuse textile soit inférieure ou égale à la longueur à vide de chaque portion filaire porteuse textile. En d'autres termes, le moule assure les fonctions de butées radiales de l'ébauche préalablement formée lors de l'étape de moulage.

Dans un mode de réalisation préféré, durant l'étape de chauffage:
- on pressurise une cavité fermée formée au moins en partie par l'espace annulaire intérieur de façon à écarter radialement la première structure de révolution par rapport à la deuxième structure de révolution, et
- on limite l'écartement radial de la première structure de révolution par rapport à la deuxième structure de révolution,
de sorte que la tension dans chaque portion filaire porteuse textile est nulle.

Ainsi, on permet la réticulation du pneumatique sans pour autant risquer de détériorer l'assemblage et l'ébauche crue alors formée en tendant chaque portion filaire porteuse textile et surtout en s'assurant que le pneumatique ne présente plus de différences entre les performances attendues et les performances réelles du pneumatique.

De façon préférée, durant l'étape de chauffage, on limite l'écartement radial de la première structure de révolution par rapport à la deuxième structure de révolution en plaquant:
- une surface radialement externe de l'ébauche crue préalablement formée contre une surface intérieure radialement externe d'un moule de réticulation, et
- une surface radialement interne de l'ébauche crue préalablement formée contre une surface intérieure radialement interne du moule de réticulation.

De façon analogue à l'étape de moulage, le moule permet de contraindre radialement les structures de révolution de sorte que chaque portion filaire porteuse textile demeure non tendue lors de l'étape de chauffage. On plaque la surface radialement externe de l'ébauche crue préalablement formée contre les faces intérieures du moule de sorte que la distance droite entre chaque couple de points de la première structure de révolution et de la deuxième structure de révolution reliés entre eux par une portion filaire porteuse textile soit inférieure ou égale à la longueur à vide de chaque portion filaire porteuse textile. En d'autres termes, le moule assure les fonctions de butées radiales de l'ébauche préalablement formée lors de l'étape de chauffage.

Dans un mode de réalisation préféré, le pneumatique comprenant une bande de roulement agencée radialement à l'extérieur de la première structure de révolution, le moule de réticulation comprend :
- une face intérieure radialement externe d'appui radial de la bande de roulement (58), et
- une face intérieure radialement interne d'appui radial de la deuxième structure de révolution.

Lors de l'étape de chauffage, la température imposée à l'ébauche crue du pneumatique suit une évolution au cours du temps fonction de nombreux paramètres, par exemple des compositions élastomériques, de la taille du pneumatique, de certaines propriétés géométriques du moule, des matériaux du moule. Ainsi, l'étape de chauffage est constituée de trois phases durant lesquelles :
- Dans une première phase, la température de chaque élément filaire porteur textile croit depuis la température ambiante jusqu'à une température stationnaire.
- Puis dans une deuxième phase, la température de chaque élément filaire porteur textile est sensiblement constante à la température stationnaire, par exemple dans un intervalle allant de 150°C à 180°C. La température la plus élevée atteinte par chaque élément filaire porteur textile durant l'étape de chauffage est atteinte durant cette deuxième phase.
- Enfin, dans une troisième phase, la température de chaque élément filaire porteur textile décroit depuis la température stationnaire pour atteindre à nouveau la température ambiante.

Avantageusement, chaque élément filaire porteur textile est réalisé dans un matériau textile ou un assemblage de matériaux textiles, le ou chaque matériau textile présentant une température de fusion ou de dégradation thermique supérieure à la température la plus élevée atteinte par chaque élément filaire porteur textile durant l'étape de chauffage de l'ébauche crue du pneumatique. Ainsi, on évite que chaque matériau constitutif de chaque élément filaire porteur textile ne soit dégradé lors de l'étape de chauffage. En d'autres termes, chaque matériau constitutif de chaque élément filaire porteur textile est stable thermiquement lors de l'étape de chauffage.

Dans certains modes de réalisation, chaque élément filaire porteur textile est réalisé dans un matériau textile ou un assemblage de matériaux textiles, le ou chaque matériau textile présentant une température de transition vitreuse inférieure à la température la plus élevée atteinte par chaque élément filaire porteur textile durant l'étape de chauffage de l'ébauche crue du pneumatique. Grâce à l'invention, on évite toute relaxation de tels matériaux pour lesquels la température de transition vitreuse est atteinte lors de l'étape de chauffage par chaque élément filaire porteur textile lorsque celle-ci est sélectionnée dans un intervalle allant de 150°C à 180°C.

Chaque température de transition vitreuse, de fusion ou de dégradation thermique de chaque matériau est mesurée de manière connue par DSC (acronyme de l'expression « Differential Scanning Calorimetry »), par exemple selon la norme ASTM D3418 de 1999 ou bien la norme ASTM D1356 de 2010, la norme applicable dépendant du ou des matériaux constitutifs de la portion filaire porteuse textile.

Avantageusement, le ou chaque matériau textile est choisi parmi un polyester, un polyamide, une polycétone, un polyuréthanne, un alcool polyvinylique, une cellulose, un une fibre minérale, une fibre naturelle.

De façon préférée, lors de l'étape d'enroulage, la première structure de premiers éléments filaires s'étendant selon une première direction générale, on enroule, autour du support d'assemblage l'assemblage de sorte que la première direction générale et la direction circonférentielle du support d'assemblage forment un angle inférieur ou égal à 10°.

Par direction générale, on entend la direction générale selon laquelle s'étend la structure d'éléments filaires selon sa plus grande longueur et qui est parallèle aux bords longitudinaux de la structure d'éléments filaires. Ainsi, par exemple, une structure d'éléments filaires enroulée sur une bobine de révolution autour d'un axe présente une direction générale sensiblement parallèle à la direction de déroulage de la structure (ie la direction circonférentielle) qui est perpendiculaire aux directions axiale et radiale de la bobine.

Dans un premier mode de réalisation, avantageusement, on enroule l'assemblage circonférentiellement sur au plus un tour complet autour de l'axe principal de façon à ce que la première structure de premiers éléments filaires forme, lorsqu'on se déplace axialement d'un bord axial du support d'assemblage à l'autre bord axial du support d'assemblage, un enroulement cylindrique axialement continu de l'assemblage.

Dans ce premier mode de réalisation, avantageusement, on enroule, autour du support d'assemblage l'assemblage de sorte que la première direction générale et la direction circonférentielle du support d'assemblage forment un angle inférieur ou égal à 5°, de préférence un angle sensiblement nul.

Dans une première variante de ce premier mode de réalisation dans laquelle la première structure de premiers éléments filaires est un premier tissu tel que décrit ci-après et permettant d'utiliser un premier tissu de conception simple, la première direction de chaine et la direction circonférentielle du support d'assemblage forment un angle non nul et de préférence allant de 25° à 60°. Un procédé détaillant certains aspects de ce mode de réalisation est notamment décrit dans le document WO 2017/005713. Ainsi, on obtient un pneumatique dans lequel la première direction de chaine et la direction circonférentielle du pneumatique forment un angle non nul et de préférence allant de 15° à 45°.

Dans une deuxième variante de ce premier mode de réalisation dans laquelle la première structure de premiers éléments filaires est un premier tissu tel que décrit ci-après et permettant un procédé de fabrication simplifié, la première direction de chaine et la direction circonférentielle du support d'assemblage forment un angle inférieur ou égal à 10°, de préférence inférieur ou égal à 5°, et plus préférentiellement un angle sensiblement nul.. Les procédés correspondants à de tels modes de réalisation sont notamment décrits dans les documents WO 2018/130782, WO 2018/130783 et WO 2018/130785.

Dans un deuxième mode de réalisation, avantageusement, on enroule l'assemblage circonférentiellement sur plusieurs tours complets autour de l'axe principal de façon à ce que la première structure de révolution forme, lorsqu'on se déplace axialement d'un bord axial du support d'assemblage à l'autre bord axial du support d'assemblage, un enroulement cylindrique hélicoïdal axialement discontinu de l'assemblage.

Dans ce deuxième mode de réalisation, avantageusement, on enroule, autour du support d'assemblage l'assemblage de sorte que la première direction générale et la direction circonférentielle du support d'assemblage forme un angle sensiblement non nul inférieur ou égal à 10°, de préférence un angle sensiblement non nul inférieur ou égal à 5°.

Dans une première variante de ce deuxième mode de réalisation dans laquelle la première structure de premiers éléments filaires est un premier tissu tel que décrit ci-après et permettant d'utiliser un premier tissu de conception simple, la première direction de chaine et la direction circonférentielle du support d'assemblage forment un angle non nul et de préférence allant de 25° à 60°. Un procédé détaillant certains aspects de ce mode de réalisation est notamment décrit dans le document WO 2017/005713. Ainsi, on obtient un pneumatique dans lequel la première direction de chaine et la direction circonférentielle du pneumatique forment un angle non nul et de préférence allant de 15° à 45°.

Dans une deuxième variante de ce deuxième mode de réalisation dans laquelle la première structure de premiers éléments filaires est un premier tissu tel que décrit ci-après et permettant un procédé de fabrication simplifié, la première direction de chaine et la direction circonférentielle du support d'assemblage forment un angle inférieur ou égal à 10°, de préférence inférieur ou égal à 5°, et plus préférentiellement un angle sensiblement nul.. Les procédés correspondants à de tels modes de réalisation sont notamment décrits dans les documents WO 2018/130782, WO 2018/130783 et WO 2018/130785.

Avantageusement, préalablement à l'étape d'assemblage, le procédé comprend une étape d'imprégnation de l'assemblage durant laquelle on imprègne la première structure de premiers éléments filaires et la deuxième structure de deuxièmes éléments filaires respectivement par une première composition polymérique et une deuxième composition polymérique.

Dans ce mode de réalisation avantageux, la première structure de révolution comprend la première structure de premiers éléments filaires imprégnée au moins en partie de la première composition polymérique et la deuxième structure de révolution comprend la deuxième structure de deuxièmes éléments filaires imprégnée au moins en partie de la deuxième composition polymérique.

Chaque première et deuxième composition polymérique permet d'assurer la cohésion physico-chimique de l'assemblage avec les autres éléments du pneumatique.

Par imprégnée, on entend que chaque composition polymérique pénètre au moins en surface la structure d'éléments filaires. On peut donc avoir une imprégnation unifaciale avec une couverture d'une face de la structure d'éléments filaires par la composition polymérique ou une imprégnation bifaciale avec une couverture des deux faces de la structure d'éléments filaires par la composition polymérique. Dans les deux cas, l'imprégnation permet de créer un ancrage mécanique grâce à la pénétration de la composition polymérique dans les interstices présents dans de la structure d'éléments filaires.

Dans un mode de réalisation, chaque composition polymérique comprend au moins un élastomère, de préférence un élastomère diénique. Par élastomère ou caoutchouc (les deux termes étant synonymes) du type diénique, on entend de manière générale un élastomère issu au moins en partie (i.e. un homopolymère ou un copolymère) de monomères diènes (monomères porteurs de deux doubles liaisons carbone-carbone, conjuguées ou non). Cette composition peut alors se trouver soit à l'état crue ou à l'état cuit.

De manière particulièrement préférentielle, l'élastomère diénique de la composition de caoutchouc est choisi dans le groupe constitué par les polybutadiènes (BR), les polyisoprènes de synthèse (IR), le caoutchouc naturel (NR), les copolymères de butadiène, les copolymères d'isoprène et les mélanges de ces élastomères. De tels copolymères sont plus préférentiellement choisis dans le groupe constitué par les copolymères de butadiène-styrène (SBR), les copolymères d'isoprène-butadiène (BIR), les copolymères d'isoprène-styrène (SIR), les copolymères d'isoprène-butadiène-styrène (SBIR) et les mélanges de tels copolymères.

Par ailleurs, dans ce mode de réalisation, chaque composition polymérique comprend, en plus de l'élastomère, de préférence diénique, une charge renforçante, par exemple du noir de carbone, un système de réticulation, par exemple un système de vulcanisation et des additifs divers.

Dans un autre mode de réalisation, chaque composition polymérique comprend au moins un polymère thermoplastique. Un polymère thermoplastique est par définition thermofusible. Des exemples de tels polymères thermoplastiques sont les polyamides aliphatiques, par exemple le nylon, les polyesters, par exemple le PET ou le PEN, et les élastomères thermoplastiques (en abrégé "TPE").

Les première et deuxième compositions polymériques peuvent être différentes ou identiques. Par exemple, la première composition polymérique peut comprendre un élastomère diénique et la deuxième composition polymérique peut comprendre un élastomère thermoplastique ou inversement.

Avantageusement, préalablement à la formation de l'espace annulaire intérieur, on relie entre elles chaque extrémité axiale de la première structure de révolution et chaque extrémité axiale de la deuxième structure de révolution par un flanc, les deux flancs délimitant axialement l'espace annulaire intérieur.

Avantageusement, préalablement à la formation de l'espace annulaire intérieur, on enroule une structure de révolution de carcasse radialement à l'extérieur de la première structure de révolution.

De façon préférée, on relie continûment chaque extrémité axiale de la deuxième structure de révolution par la structure de révolution de carcasse s'étendant radialement au travers de chaque flanc et axialement sur toute la largeur axiale de la première structure de révolution.

Avantageusement, après la formation de l'espace annulaire intérieur, on enroule la structure de révolution de sommet radialement à l'extérieur de la première structure de premiers éléments filaires, et de préférence radialement à l'extérieur de la structure de révolution de carcasse.

Avantageusement, après la formation de l'espace annulaire intérieur, on enroule une bande de roulement radialement à l'extérieur de la première structure de premiers éléments filaires, de préférence radialement à l'extérieur de la structure de révolution de sommet.

De préférence, on enroule simultanément radialement à l'extérieur de la première structure de premiers éléments filaires, et de préférence radialement à l'extérieur de la structure de révolution de carcasse, la structure de révolution de sommet et la bande de roulement préalablement assemblées ensemble.

Dans un mode de réalisation, chaque élément filaire porteur s'étend alternativement de la première structure de premiers éléments filaires vers la deuxième structure de deuxièmes éléments filaires et de la deuxième structure de deuxièmes éléments filaires vers la première structure de premiers éléments filaires lorsqu'on se déplace le long de l'élément filaire porteur.

Dans un mode de réalisation, chaque élément filaire porteur textile comprend une première portion filaire d'ancrage de chaque élément filaire porteur textile dans la première structure de premiers éléments filaires prolongeant la portion filaire porteuse textile dans la première structure de premiers éléments filaires. Dans un mode de réalisation avantageusement combinable avec le mode de réalisation précédent, chaque élément filaire porteur textile comprend une deuxième portion filaire d'ancrage de chaque élément filaire porteur textile dans la deuxième structure de premiers éléments filaires prolongeant la portion filaire porteuse textile dans la deuxième structure de premiers éléments filaires.

Préférentiellement, chaque première et deuxième portion filaire d'ancrage est entrelacée avec respectivement chaque première et deuxième structure d'éléments filaires. Un tel assemblage présente l'avantage de pouvoir être fabriqué en une seule étape. Toutefois, il est également possible d'envisager de fabriquer l'assemblage en deux étapes, une première étape de fabrication de la ou des structures d'éléments filaires et une deuxième étape d'entrelacement du ou des éléments filaires porteurs avec les structures d'éléments filaires. Dans les deux cas, l'entrelacement de chaque élément porteur avec la ou les structures d'éléments filaires permet d'assurer l'ancrage mécanique de chaque élément porteur dans chaque structure d'éléments filaires et ainsi de conférer les propriétés mécaniques souhaitées à la structure porteuse.

Dans un mode de réalisation, afin d'assurer l'ancrage mécanique de la portion filaire d'ancrage, chaque première portion filaire d'ancrage est enroulée au moins en partie autour d'au moins un premier élément filaire la première structure de premiers éléments filaires. De façon analogue, dans un mode de réalisation, chaque deuxième portion filaire d'ancrage est enroulée au moins en partie autour d'au moins un deuxième élément filaire la deuxième structure de deuxièmes éléments filaires.

Dans un mode de réalisation, la première structure de premiers éléments filaires est un premier tissu ou un premier tricot et de préférence est un premier tissu.

Dans un mode de réalisation, la deuxième structure de deuxièmes éléments filaires est un deuxième tissu ou un deuxième tricot et de préférence est un deuxième tissu.

Dans un mode de réalisation préféré, la première structure de premiers éléments filaires est un premier tissu comprenant :
- des premiers éléments filaires, dits de chaine, sensiblement parallèles entre eux et s'étendant selon une première direction, dite de chaine, et
- des premiers éléments filaires, dits de trame, sensiblement parallèles entre eux et s'étendant selon une première direction, dite de trame, les premiers éléments filaires de trame s'entrecroisant avec les premiers éléments filaires de chaine.

Avantageusement, les premières directions de chaine et de trame forment l'une avec l'autre un angle allant de 70° à 90°, de préférence sensiblement égal à 90°.

Dans un mode de réalisation également préférentiel, la deuxième structure de deuxièmes éléments filaires est un tissu comprenant :
- des deuxièmes éléments filaires, dits de chaine, sensiblement parallèles entre eux et s'étendant selon une deuxième direction, dite de chaine, et
- des deuxièmes éléments filaires, dits de trame, sensiblement parallèles entre eux et s'étendant selon une deuxième direction, dite de trame, les deuxièmes éléments filaires de trame s'entrecroisant avec les deuxièmes éléments filaires de chaine.

Avantageusement, les deuxièmes directions de chaine et de trame forment l'une avec l'autre un angle allant de 70° à 90°, de préférence sensiblement égal à 90°.

Dans ces modes de réalisation préférentiels, chaque premier et deuxième tissu comprend, de manière connue pour l'homme du métier, une armure caractérisant l'entrecroisement des éléments filaires de chaine et de trame. Ainsi, selon les modes de réalisation, cette armure est de type toile, serge ou satin. De façon préférée, afin de conférer des bonnes propriétés mécaniques dans une utilisation en pneumatique, l'armure est de type toile.

Les caractéristiques mécaniques de tels tissus telles que leur rigidité en extension et leur force à force maximale en traction, selon le sens des éléments filaires de chaine ou de trame, dépendent des caractéristiques des éléments filaires, telles que, pour des éléments filaires textiles, le titre, exprimé en tex ou g/1000 m, la ténacité, exprimée en cN/tex, et la contraction standard, exprimée en %, ces éléments filaires étant répartis selon une densité donnée, exprimée en nombre de fils/dm. Toutes ces caractéristiques sont fonction du matériau constitutif des éléments filaires et de leur procédé de fabrication.

Dans d'autres modes de réalisation, le premier et/ou le deuxième tissu ou tricot est un tricot comprenant des boucles entrelacées.

De préférence, chaque première portion filaire d'ancrage passe alternativement d'une face du premier tissu à l'autre face du premier tissu entre deux premiers éléments filaires de trame adjacents autour desquels la première portion filaire d'ancrage s'enroule.

De préférence, chaque deuxième portion filaire d'ancrage passe alternativement d'une face du deuxième tissu à l'autre face du deuxième tissu entre deux deuxièmes éléments filaires de trame adjacents autour desquels la deuxième portion filaire d'ancrage s'enroule.

Le procédé selon l'invention permet de fabriquer un pneumatique de révolution autour d'un axe principal comprenant :
- une première structure de révolution comprenant une première structure de premiers éléments filaires,
- une deuxième structure de révolution comprenant une deuxième structure de deuxièmes éléments filaires, la deuxième structure de révolution étant agencée radialement à l'intérieur de la première structure de révolution,
- une structure porteuse comprenant des éléments filaires porteurs reliant la première structure de premiers éléments filaires et la deuxième structure de deuxièmes éléments filaires entre elles, chaque élément filaire porteur comprenant au moins une portion filaire porteuse s'étendant entre la première structure de premiers éléments filaires et la deuxième structure de deuxièmes éléments filaires.

Conformément à l'invention et comme expliqué ci-dessus, un tel pneumatique présente des performances réelles conformes aux performances attendues.

La première structure de révolution radialement extérieure du pneumatique est destinée à assurer, entre autres fonctions, la liaison de l'assemblage avec une structure de révolution de sommet. La deuxième structure de révolution radialement intérieure du pneumatique est destinée à assurer, entre autres fonctions, la liaison de l'assemblage, et donc du pneumatique, avec le moyen de montage.

La première structure de révolution radialement extérieure du pneumatique présente un axe de révolution confondu avec l'axe de rotation du pneumatique. La deuxième de révolution radialement intérieure du pneumatique est coaxiale à la première structure de révolution radialement extérieure du pneumatique.

En l'absence de charge appliquée au pneumatique et en l'absence de pression dans le pneumatique, l'espace annulaire intérieur a une hauteur radiale moyenne H. Lorsque le pneumatique est soumis à une charge radiale nominale Z_{N} et est en contact avec un sol plan par une surface de contact A, les éléments porteurs, reliés à la portion de la première structure de révolution radialement extérieure du pneumatique en contact avec le sol par l'intermédiaire de la première structure de premiers éléments filaires, sont soumis à un flambage en compression et au moins une partie des éléments porteurs, reliés à la portion de première structure de révolution radialement extérieure du pneumatique non en contact avec le sol, sont en tension.

La première structure de révolution comprend la première structure de premiers éléments filaires imprégnée au moins en partie d'une première composition polymérique et la deuxième structure de révolution comprend la deuxième structure de deuxièmes éléments filaires imprégnée au moins en partie d'une deuxième composition polymérique.

Cette conception permet avantageusement d'avoir un assemblage pouvant être fabriquée de façon indépendante et intégrée d'un seul bloc lors de la fabrication du pneumatique. L'assemblage utilisé peut être solidarisé à d'autres éléments du pneumatique par vulcanisation, collage ou tout autre procédé de liaison des première et deuxième couches des première et deuxième compositions polymériques.

La première structure de premiers éléments filaires radialement extérieure et la deuxième structure de deuxièmes éléments filaires radialement intérieure servent d'interfaces entre les éléments porteurs et les structures de révolution respectivement radialement extérieure et radialement intérieure qui ne sont donc pas en contact direct.

Grâce au pneumatique décrit, on observe une mise à plat améliorée de la bande de roulement, en particulier dans un plan méridien, par une augmentation des rayons de courbure méridiens au niveau des extrémités axiales de la bande roulement.

Il en résulte, en particulier, une homogénéisation des pressions dans l'aire de contact au sol, ce qui contribue à une augmentation de la durée de vie en usure et de l'adhérence du pneumatique.

Enfin, la résistance au roulement d'un tel pneumatique est sensiblement diminuée, ce qui est favorable à une baisse de la consommation de carburant du véhicule.

En mettant en oeuvre le procédé décrit ci-dessus, on peut fabriquer un pneumatique comprenant avantageusement une structure de révolution de sommet agencée radialement à l'extérieur de la première structure de révolution.

On peut également avantageusement fabriquer un pneumatique comprenant deux flancs reliant entre elles chaque extrémité axiale de la première structure de révolution et chaque extrémité axiale de la deuxième structure de révolution, les deux flancs délimitant axialement l'espace annulaire intérieur ; l'espace annulaire intérieur étant agencé de sorte que l'espace annulaire intérieur forme au moins une partie d'une cavité fermée apte à être pressurisée par un gaz de gonflage.

Dans un mode de réalisation préféré, la cavité fermée est délimitée radialement au moins en partie d'une part, par la première structure de révolution et, d'autre part, par la deuxième structure de révolution.

Avantageusement, les flancs ne sont pas liés directement à l'assemblage et de préférence ne sont pas liés directement aux éléments porteurs. Les flancs participent en partie au port de la charge, selon leur propre rigidité structurelle. Toutefois, les flancs ont un comportement mécanique indépendant et n'interfèrent pas dans le comportement mécanique de la structure porteuse. Les flancs comprennent généralement au moins un matériau élastomérique et peuvent comprendre éventuellement une armature de renforcement.

Dans un mode de réalisation préféré, le pneumatique comprend une structure de révolution de carcasse agencée radialement entre la première structure de révolution et la structure de révolution de sommet. Ainsi, une telle structure de carcasse permet de reprendre une partie des efforts exercés par la pression à l'intérieur du pneumatique.

Dans un mode de réalisation particulièrement préféré, la structure de révolution de carcasse comprend une nappe de carcasse comprenant des éléments filaires de renforts de carcasse. Une telle structure de révolution de carcasse favorise la déformation uniforme de la première structure de premiers éléments filaires, et dans les modes de réalisation correspondants, la déformation uniforme des zones transversales du premier groupe. Les inventeurs émettent l'hypothèse que les efforts de déformation selon la première direction générale de la première structure de premiers éléments filaires sont, lors du procédé de fabrication du pneumatique, transmis le long de la première structure de premiers éléments filaires par la structure de révolution de carcasse.

Avantageusement, les éléments filaires de renfort de carcasse s'étendent axialement entre chaque flanc du pneumatique et radialement entre la première structure de révolution et la deuxième structure de révolution.

De préférence, chaque élément filaire de renfort de carcasse s'étend selon une direction faisant un angle supérieur ou égal à 65°, de préférence supérieur ou égal à 80° et plus préférentiellement sensiblement égal à 90° avec la direction circonférentielle du pneumatique.

Avantageusement, la structure de révolution de sommet comprend au moins une nappe de travail, la ou chaque nappe de travail comprenant des éléments filaires de renfort de travail sensiblement parallèles les uns aux autres.

Avantageusement, chaque élément filaire de renfort de travail s'étend axialement d'un bord à l'autre de la nappe de travail.

De préférence, chaque élément filaire de renfort de travail s'étend selon une direction faisant un angle allant de 15° et 40°, de préférence allant de 20° à 30° avec la direction circonférentielle du pneumatique. Dans le cas où la structure de révolution de sommet comprend deux nappes de travail, les éléments filaires de renfort de travail sont croisés d'une nappe de travail par rapport à l'autre.

Avantageusement, la structure de révolution de sommet comprend une nappe de frettage comprenant des éléments filaires de renfort de frettage sensiblement parallèles les uns aux autres formant un angle au plus égal à 10°, de préférence allant de 5° à 10° avec la direction circonférentielle du pneumatique.

Dans un mode de réalisation préféré, la nappe de frettage est agencée radialement à l'extérieur des nappes de travail.

Le pneumatique décrit ci-dessus peut être utilisé dans un ensemble monté comprenant un pneumatique tel que défini ci-dessus, le pneumatique étant monté sur un moyen de montage de l'ensemble monté sur un véhicule.

Le moyen de montage est par exemple une jante. De préférence, le moyen de montage comprend une face coopérant avec une face externe du pneumatique selon l'invention. Les deux faces coopérante sont maintenues au contact l'une de l'autre, par exemple par collage ou bien par les forces de pression résultant du gonflage du pneumatique.

L'invention sera mieux comprise à la lecture de la description qui va suivre, donnée uniquement à titre d'exemple non limitatif et faite en se référant aux dessins dans lesquels:
- La figure 1 est un graphique illustrant la relaxation des portions filaires porteuses textiles observée dans le procédé de l'état de la technique décrit dans WO 2018/130785 ;
- la figure 2 est une vue en perspective et en coupe partielle d'un pneumatique selon un premier mode de réalisation représenté en l'absence de charge appliquée et de pression ;
- la figure 3 est une vue de détail de structures de révolution du pneumatique de la figure 2, notamment d'une structure porteuse comprenant des éléments filaires porteurs ;
- la figure 4 est une vue en coupe circonférentielle du pneumatique de la figure 2, représenté dans un état écrasé sous l'effet d'une charge et en présence de pression ;
- la figure 5 est une vue en coupe méridienne du pneumatique de la figure 4;
- la figure 6 est une vue en arraché du pneumatique de la figure 2 illustrant une première structure de premiers éléments filaires ;
- la figure 7 est une vue d'une première structure de premiers éléments filaires avant assemblage ;
- les figures 8 à 16 sont des vues schématiques des différentes étapes du procédé de fabrication selon l'invention du pneumatique de la figure 2 ; et
- les figures 17 et 18 sont des figures analogues aux figures 2 et 6 d'un pneumatique selon un deuxième mode de réalisation.

Dans les figures, on a représenté un repère X, Y, Z correspondant aux orientations habituelles respectivement axiale (selon la direction YY'), radiale (selon la direction ZZ') et circonférentielle (selon la direction XX') d'un pneumatique. Sur les figures, les axes ZZ' et XX' définissent le plan circonférentiel médian du pneumatique.

### PNEUMATIQUE SELON UN PREMIER MODE DE REALISATION

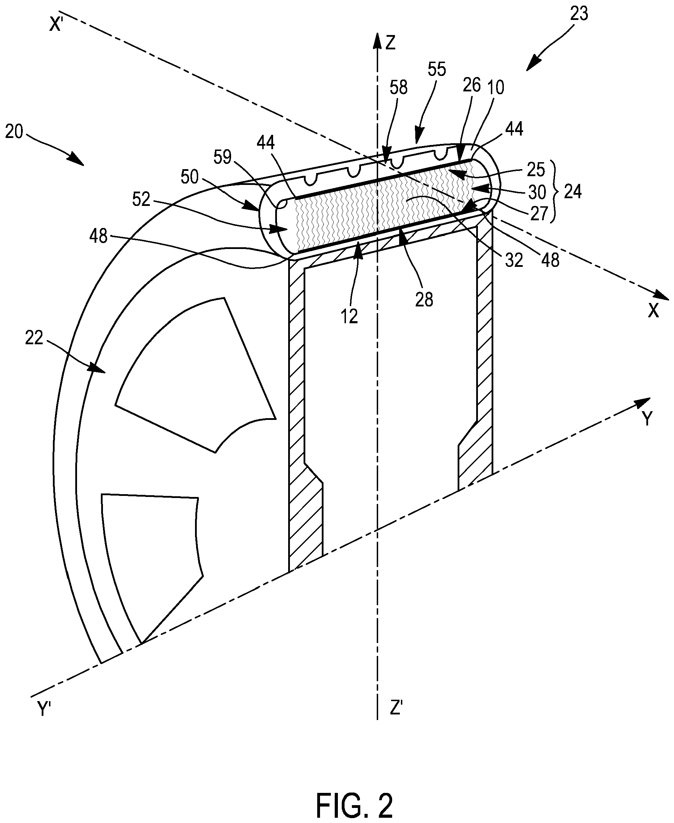

On a représenté sur la figure 2 un pneumatique conforme à un premier mode de réalisation et désigné par la référence générale 20. Le pneumatique 20 est sensiblement de révolution autour d'un axe principal sensiblement parallèle à la direction axiale YY'. Le pneumatique 20 est ici destiné à un véhicule de tourisme. Sur la figure 2, le pneumatique 20 est monté sur un moyen de montage 22, ici une jante, formant ainsi un ensemble monté 23 pour véhicule.

Le pneumatique 20 comprend une première structure de révolution 25 et une deuxième structure de révolution 27. La deuxième structure de révolution 27 est agencée radialement à l'intérieur de la première structure de révolution 25.

Comme illustré sur les figures 2, 8 et 16 notamment, le pneumatique 20 comprend un assemblage 24 comprenant une première structure 10 d'éléments filaires, ici un premier tissu 26, et une deuxième structure 12 d'éléments filaires, ici un deuxième tissu ou tricot 28, et de préférence un tissu 28.

La première structure de révolution 25 comprend la première structure 10 d'éléments filaires, ici le premier tissu 26, et une première couche 33 d'une première composition polymérique 34, le premier tissu 26 étant imprégné au moins en partie de la première composition polymérique 34. La deuxième structure de révolution 27 comprend la deuxième structure 12 d'éléments filaires, ici le deuxième tissu 28, et une deuxième couche 35 d'une deuxième composition polymérique 36, le deuxième tissu 28 étant imprégné au moins en partie de la deuxième composition polymérique 36. En variante, la deuxième structure 27 comprend un tricot imprégné au moins en partie par la deuxième composition polymérique 36. Ainsi, au sein du pneumatique 20, chaque premier et deuxième tissu 26, 28 imprégné forme respectivement chaque première et deuxième structures de révolution 25, 27.

Chaque première et deuxième composition polymérique 34, 36 comprend par exemple une composition élastomérique comprenant au moins un élastomère, de préférence diénique, par exemple du caoutchouc naturel.

L'assemblage 24 comprend également une structure porteuse 30 comprenant des éléments filaires porteurs 32 reliant les premier et deuxième tissus 26, 28 entre eux et s'étendant entre la première structure 10 d'éléments filaires et la deuxième structure 12 d'éléments filaires. La structure porteuse 30 est ici constituée d'une pluralité d'éléments filaires porteurs 32 tous identiques.

Comme illustré sur la figure 2, le pneumatique 20 comprend une structure de révolution de carcasse 51 et une structure de révolution de sommet 55. La structure de révolution de carcasse 51 est agencée radialement entre la première structure de révolution 25 et la structure de révolution de sommet 55. Le pneumatique 20 comprend également deux flancs 50.

La structure de révolution de carcasse 51 comprend une nappe de carcasse 53 comprenant des éléments filaires de renfort de carcasse s'étendant axialement entre chaque flanc 50 et radialement entre la première structure de révolution 25 et la deuxième structure de révolution 27. Chaque élément filaire de renfort de carcasse s'étend selon une direction faisant un angle supérieur ou égal à 65°, de préférence supérieur ou égal à 80° et ici plus préférentiellement sensiblement égal à 90° avec la direction circonférentielle XX' du pneumatique 20. En l'espèce, les éléments filaires de renfort sont des éléments de renfort filaires textiles, par exemple comprenant deux brins de polyester de 144 tex enroulés à 290 tours ensemble.

La structure de révolution de sommet 55 agencée radialement à l'extérieur de la structure de révolution de carcasse 51 et radialement à l'extérieur de la première structure de révolution 25 comprend deux nappes de travail 54, 56. Chaque nappe de travail 54, 56 comprend des éléments filaires de renfort de travail s'étendant, au sein d'une nappe, sensiblement parallèlement les uns aux autres et axialement d'un bord à l'autre de chaque nappe de travail 54, 56 selon une direction faisant un angle allant de 15° et 40°, de préférence allant de 20° à 30° avec la direction circonférentielle du pneumatique et ici égal à 38°. Les éléments de renfort de travail sont croisés d'une nappe de travail 54, 56 par rapport à l'autre. En l'espèce, les éléments de renfort de travail sont des éléments de renfort filaires métalliques, par exemple des câbles de structure 2x0.30 mm.

La structure de révolution de sommet 55 comprend également une nappe de frettage 57 agencée radialement à l'extérieur des nappes de travail 54, 56. La nappe de frettage 57 comprend des éléments de renfort filaires de frettage sensiblement parallèles les uns aux autres formant un angle au plus égal à 10°, de préférence allant de 5° à 10° avec la direction circonférentielle du pneumatique 10 et ici égal à 5°. En l'espèce, les éléments de renfort de frettage sont des éléments de renfort filaires textiles, par exemple comprenant deux brins d'aramide de 167 tex enroulés à 315 tours ensemble.

Comme illustré sur les figures 2, 3 et 5, le pneumatique 20 comprend également une bande de roulement 58 agencée radialement à l'extérieur de la structure de révolution de sommet 55.

Chaque nappe de carcasse 53, de travail 54, 56 et de frettage 57 comprend une composition polymérique, par exemple une composition élastomérique comprenant au moins un élastomère, de préférence diénique, par exemple du caoutchouc naturel, dans laquelle sont noyés les éléments de renfort correspondants.

La bande de roulement 58 est destinée à entrer en contact avec un sol. La bande de roulement 58 est constituée d'une composition polymérique, par exemple une composition élastomérique comprenant au moins un élastomère, de préférence diénique, par exemple du caoutchouc naturel.

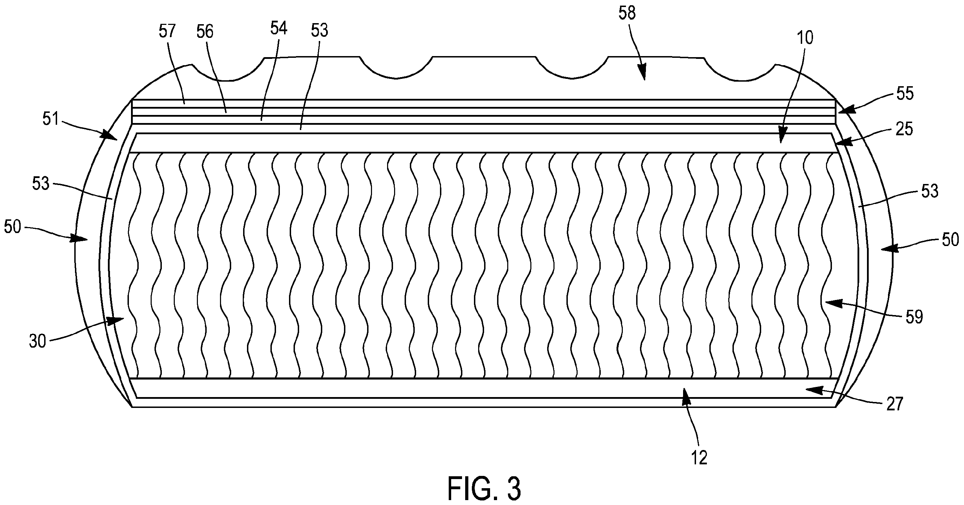

Comme illustré sur les figures 2 et 3, la première structure de révolution 25, la deuxième structure de révolution 27, la structure de carcasse 51, la structure de révolution de sommet 55 et la bande de roulement 58 présentent un axe de révolution commun, en l'espèce l'axe de rotation YY' du pneumatique 20.

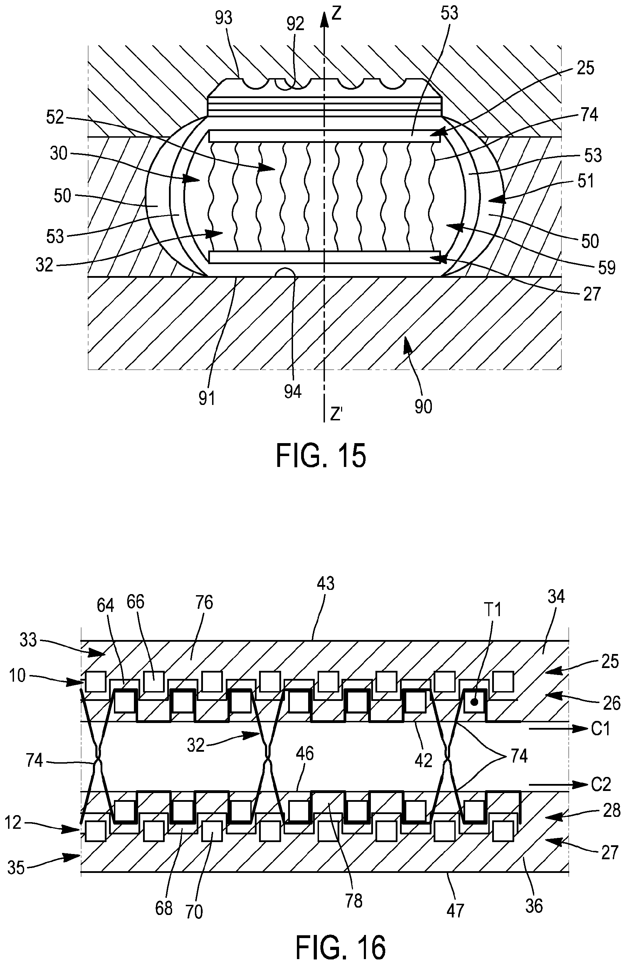

En référence à la figure 16, la première structure de révolution 25 présente une face interne 42 et une face externe 43 ainsi que deux extrémités axiales 44. La face interne 42 est une face interne du premier tissu 26 et la face externe 43 est une face externe de la première couche 33. Le premier tissu 26 comprend également une face externe 41 agencée radialement, au sein du pneumatique 20, à l'extérieur de la face interne 42. Au sein du pneumatique 20, la face interne 42 est agencée radialement à l'intérieur de la face externe 43.

La deuxième structure de révolution 27 présente une face interne 46 et une face externe 47 ainsi que deux extrémités axiales 48. La face interne 46 est une face interne du deuxième tissu 28 et la face externe 47 est une face externe de la deuxième couche 35. Le deuxième tissu 28 comprend également une face externe 49 agencée radialement, au sein du pneumatique 20, à l'intérieur de la face interne 46. Au sein du pneumatique 20, la face interne 46 est agencée radialement à l'extérieur de la face externe 47.

Les deux faces 42 et 46 sont en regard l'une de l'autre et sensiblement parallèle l'une à l'autre. Au sein du pneumatique 20, chaque surface 42, 46 décrit un cylindre de révolution autour de l'axe YY' du pneumatique 20.

Chaque flanc 50 relie entre elles chaque extrémité axiale 44 de la première structure de révolution 25 et chaque extrémité axiale 48 de la deuxième structure de révolution 27. La structure de révolution de carcasse 51 s'étend continûment entre chaque extrémité axiale 48 de la deuxième structure de révolution 27 radialement au travers de chaque flanc 50 et axialement sur toute la largeur axiale de la première structure de révolution 25. Le pneumatique 20 comprend également un espace annulaire intérieur 52 délimité au moins en partie d'une part radialement, par chaque première et deuxième structure de révolution 25, 27 et ici par chaque face interne 42 et 46 et, d'autre part axialement, par les deux flancs 50. L'espace annulaire intérieur 52 est agencé de sorte que l'espace annulaire intérieur 52 forme au moins une partie d'une cavité 59 fermée et apte à être pressurisée par un gaz de gonflage, par exemple de l'air. La cavité fermée 59 est délimitée radialement au moins en partie d'une part, par la première structure 10 de premiers éléments filaires 64, 66 et, d'autre part, par la deuxième structure 12 de deuxièmes éléments filaires 68, 70. Les éléments porteurs 32 sont deux à deux indépendants dans l'espace annulaire intérieur 52.

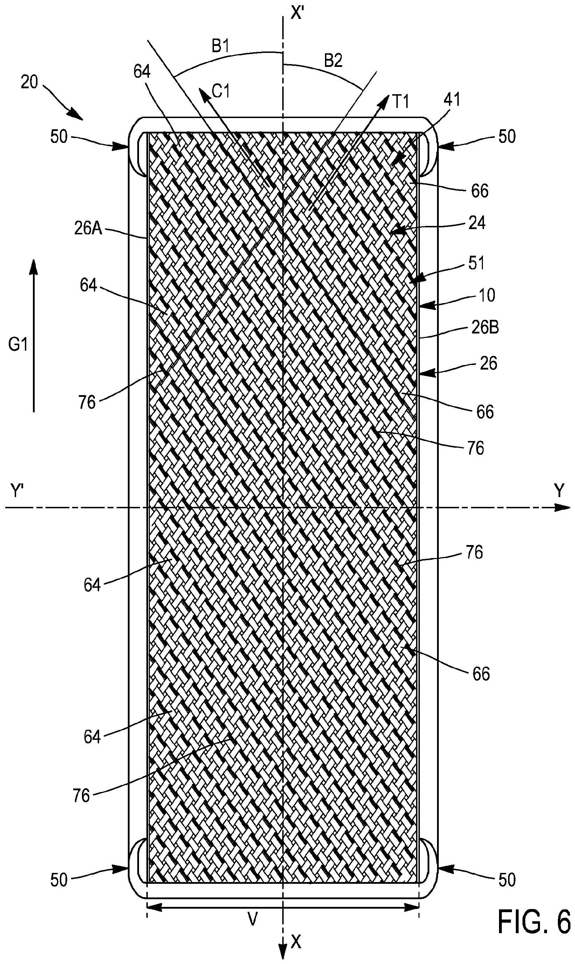

Dans ce premier mode de réalisation, l'assemblage 24 s'étend circonférentiellement sur au plus un tour complet autour de l'axe principal YY' du pneumatique 20 de façon à ce que la première structure de révolution 25 forme un enroulement cylindrique axialement continu de l'assemblage 24 entre les deux flancs 50 du pneumatique 20 comme cela est illustré sur la figure 6.

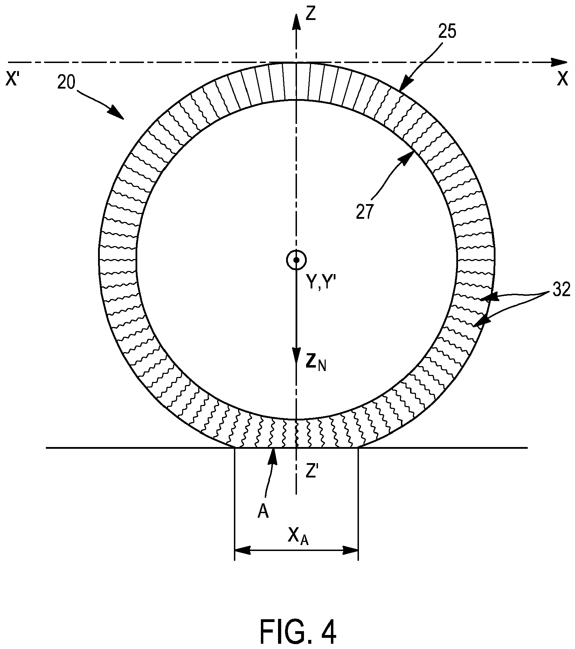

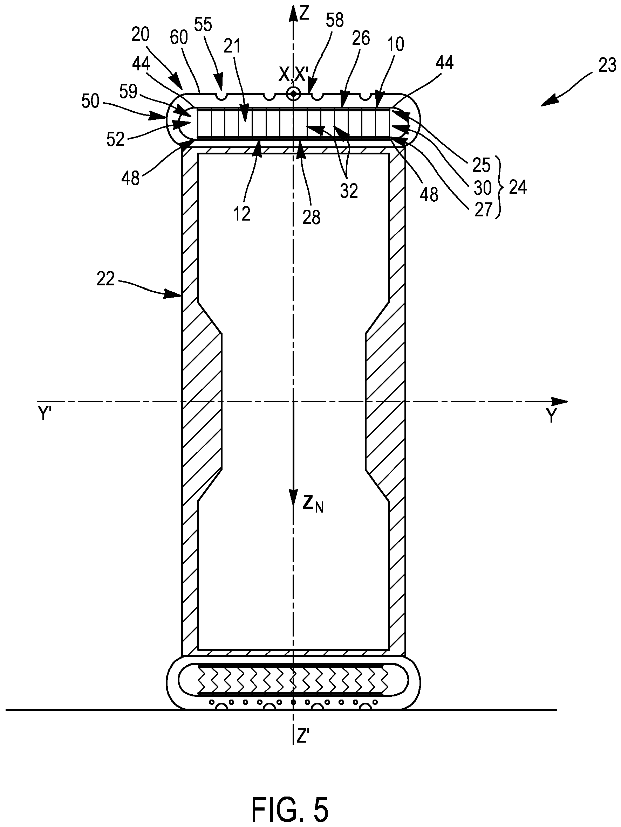

Sur les figures 4 et 5, le pneumatique 20, représenté de façon simplifiée, est soumis à une charge radiale nominale Z_{N}. Le pneumatique 20 est en contact avec un sol plan par une surface de contact A, ayant une longueur circonférentielle X_{A}. Les éléments porteurs 32, reliés à la portion de la première structure de révolution 25 en contact avec le sol par l'intermédiaire de la bande de roulement, sont soumis à flambage en compression, alors qu'au moins une partie des éléments porteurs 32 et ici au moins une partie des portions filaires porteuses 74, reliés à la portion de la première structure de révolution 25 non en contact avec le sol et situées diamétralement à l'opposé de l'aire de contact, sont dans un état tendu. Le pneumatique 20 illustré sur la figure 4 est gonflé a une pression P comprise entre 1.5 bar et 2.5 bars et est soumis à une charge radiale Z_{N} égale à 600 daN.

On a représenté sur la figure 6, la face externe 41 du premier tissu 26 intégré dans le pneumatique 20. On a volontairement omis de représenter la première couche 33 de composition polymérique 34 ainsi que les structures de révolution de carcasse 51, de sommet 55 et la bande de roulement 58 pour des raisons de clarté de l'exposé.

En référence aux figures 6, 7 et 8, la première structure 10 de premiers éléments filaires, ici le premier tissu 26, comprend deux bords longitudinaux 26A et 26B. La première structure 10 de premiers éléments filaires s'étend selon une première direction générale G1 sensiblement parallèle à chaque bord longitudinal 26A, 26B. La première structure 10 de premiers éléments filaires, ici le premier tissu 26, présente une largeur V. Cette largeur V est définie comme la distance droite séparant chaque bord longitudinal 26A, 26B selon une direction sensiblement perpendiculaire à la direction générale G1.

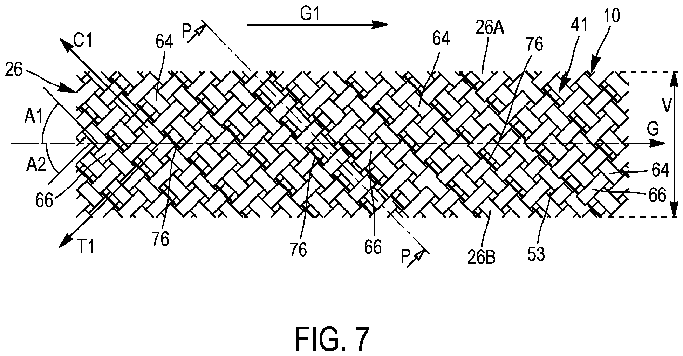

Le premier tissu 26 comprend des premiers éléments filaires 64, appelés premiers éléments filaires de chaine, et des premiers éléments filaires 66, appelés premiers éléments filaires de trame. Les premiers éléments filaires de chaine 64 du premier tissu 26 sont sensiblement parallèles entre eux et s'étendent selon une première direction dite de chaine C1 formant, une fois le pneumatique fabriqué et comme représenté sur la figure 6, un angle B1 allant de 10° à 45° avec la direction circonférentielle XX' du pneumatique 20 et ici avec la première direction générale G1. Comme illustré sur la figure 7, l'angle A1 formé par la première direction dite de chaine C1 avec la première direction générale G1 du premier tissu 26 avant son assemblage pour former une partie de l'ébauche crue du pneumatique va de 25° à 60°. Les premiers éléments filaires de trame 66 du premier tissu 26 sont sensiblement parallèles entre eux et s'étendent selon une première direction dite de trame T1 formant, une fois le pneumatique fabriqué et comme représenté sur la figure 6, un angle B2 allant de 10° à 45° avec la direction circonférentielle XX' du pneumatique 20 et ici avec la première direction générale G1, et s'entrecroisent avec les premiers éléments filaires de chaine 64. Comme illustré sur la figure 7, l'angle A2 formé par la première direction dite de trame T1 avec la première direction générale G1 du premier tissu 26 avant son assemblage pour former une partie de l'ébauche crue du pneumatique va de 25° à 60°.

De façon analogue au premier tissu 26, le deuxième tissu 28 comprend deux bords longitudinaux 28A et 28B. Le deuxième tissu 28 s'étend selon une deuxième direction générale G2 sensiblement parallèle à chaque bord longitudinal 28A, 28B. En l'espèce, la deuxième direction générale G2 est sensiblement parallèle à la première direction générale G1. Le deuxième tissu 28 comprend des deuxièmes éléments filaires 68, appelés deuxièmes éléments filaires de chaine, et des deuxièmes éléments filaires 70, appelés deuxièmes éléments filaires de trame. Les deuxièmes éléments filaires de chaine 68 du deuxième tissu 28 sont sensiblement parallèles entre eux et s'étendent selon une deuxième direction dite de chaine C2 formant, une fois le pneumatique fabriqué et comme représenté sur la figure 6, un angle allant de 10° à 45° avec la direction circonférentielle XX' du pneumatique 20 et ici avec la deuxième direction générale G2. Les deuxièmes éléments filaires de trame 70 du deuxième tissu 28 sont sensiblement parallèles entre eux et s'étendent selon une deuxième direction dite de trame T2 formant, une fois le pneumatique fabriqué et comme représenté sur la figure 6, un angle allant de 10° à 45° avec la direction circonférentielle XX' du pneumatique 20 et ici avec la deuxième direction générale G2, et s'entrecroisent avec les deuxièmes éléments filaires de chaine 68.

Au sein de chaque premier et deuxième tissu 26, 28, les directions de chaine et de trame forment l'une avec l'autre un angle allant de 70° à 90°. En l'espèce, l'angle est sensiblement égal à 90°.

Au sein du pneumatique 20, chaque première et deuxième direction générale G1, G2 forme un angle inférieur ou égal à 10° avec la direction circonférentielle XX' du pneumatique 20. Dans le premier mode de réalisation, chaque première et deuxième direction générale G1, G2 forme un angle inférieur ou égal à 5°, de préférence sensiblement nul avec la direction circonférentielle XX' du pneumatique 20.

Chaque élément filaire 64, 66, 68, 70 est un élément filaire textile.

Les éléments filaires 64 sont tous sensiblement identiques. Chaque premier élément filaire 64 de chaine comprend au moins un brin multifilamentaire comprenant plusieurs monofilaments chacun constitué d'un matériau choisi parmi un polyester, un polyamide, une polycétone, un polyuréthane, une fibre naturelle, une fibre minérale, de préférence choisi parmi un polyester, un polyamide, une polycétone, une fibre naturelle et un assemblage de ces matériaux. Chaque premier élément filaire de chaine comprend un unique brin multifilamentaire. En l'espèce, chaque premier élément filaire comprend un unique brin multifilamentaire en polyamide 66 présentant un titre égal à 11 tex et un module égal à 68,9 cN/tex.

Les éléments filaires 64, 66, 68, 70 sont tous sensiblement identiques, ici réalisés en polyéthylène téréphtalate (PET). En l'espèce, chaque élément filaire 66, 68, 70 est un élément filaire filé présentant une masse linéique égale à 170 tex et une ténacité égale à 66 cN/tex.

Chaque élément filaire porteur 32 s'étend alternativement du premier tissu 26 vers le deuxième tissu 28 et du deuxième tissu 28 vers le premier tissu 26 lorsqu'on se déplace le long de l'élément filaire porteur 32. Chaque élément filaire porteur 32 est un élément filaire porteur textile réalisé dans un matériau textile ou un assemblage de matériaux textiles, En l'espèce, le ou chaque matériau textile est choisi parmi un polyester, un polyamide, une polycétone, un polyuréthanne, un alcool polyvinylique, une cellulose, un une fibre minérale, une fibre naturelle. Ici, chaque élément filaire porteur 32 est réalisé en élasthanne et est constitué d'un unique filé de filaments d'élasthanne ayant un titre égal à 312 dtex et commercialisé sous la dénomination XLA^{™} par la société DOW CHEMICAL.

Chaque élément filaire porteur 32 comprend une portion filaire porteuse 74 s'étendant entre les premier et deuxième tissus 26, 28, notamment entre les faces internes 42 et 46. Chaque élément filaire porteur 32 comprend des première et deuxième portions filaires d'ancrage 76, 78 de l'élément filaire porteur 32 respectivement dans le premier tissu 26 et le deuxième tissu 28. Chaque première et deuxième portion filaire d'ancrage 76, 78 prolonge la portion porteuse 74 respectivement dans chaque premier tissu 26 et deuxième tissu 28. Chaque première et deuxième portion filaire d'ancrage 76, 78 est entrelacée respectivement avec chaque premier tissu 26 et deuxième tissu 28. Chaque première et deuxième portion filaire d'ancrage 76, 78 est enroulée au moins en partie autour respectivement d'au moins un premier élément filaire 64, 66 du premier tissu 26 et d'au moins un deuxième élément filaire 68, 70 du deuxième tissu 28. Ainsi, chaque portion filaire d'ancrage 76, 78 relie deux portions filaires porteuses 74 entre elles et chaque portion filaire porteuse 74 relie deux portion filaire d'ancrage 76, 78 entre elles.

En l'espèce, chaque première portion filaire d'ancrage 76 est enroulée au moins en partie autour d'au moins un premier élément filaire de trame 66 du premier tissu 26 et ici, de préférence, autour d'au moins deux premiers éléments filaire de trame 66 adjacents selon la première direction de chaine C1. De façon analogue, chaque deuxième portion filaire d'ancrage 78 est enroulée au moins en partie autour d'au moins un deuxième élément filaire de trame 68 du deuxième tissu 28, de préférence autour d'au moins deux deuxièmes éléments filaire de trame 66 adjacents la deuxième direction de chaine C2.

Chaque première et deuxième portion filaire d'ancrage 76, 78 s'étend selon une direction sensiblement parallèle à respectivement la première et deuxième direction générale de chaine C1, C2.

Chaque première portion filaire d'ancrage 76 passe alternativement de la face 41 à la face 42 entre deux premiers éléments filaires de trame 66 adjacents autour desquels la première portion filaire d'ancrage 76 s'enroule. De façon analogue, chaque deuxième portion filaire d'ancrage 78 passe alternativement de la face 46 à la face 49 entre deux deuxièmes éléments filaires de trame 68 adjacents autour desquels la deuxième portion filaire d'ancrage 78 s'enroule.

On pourrait imaginer d'autres modes de réalisation du pneumatique notamment ceux décrits dans les documents WO 2017/103490, WO 2018/130782, WO 2018/130783 et WO 2018/130785. Les autres caractéristiques de l'assemblage sont déterminables par l'homme du métier, notamment à partir de ces documents.

### PROCEDE SELON UN PREMIER MODE DE REALISATION DE L'INVENTION DE FABRICATION DU PNEUMATIQUE SELON LE PREMIER MODE DE REALISATION

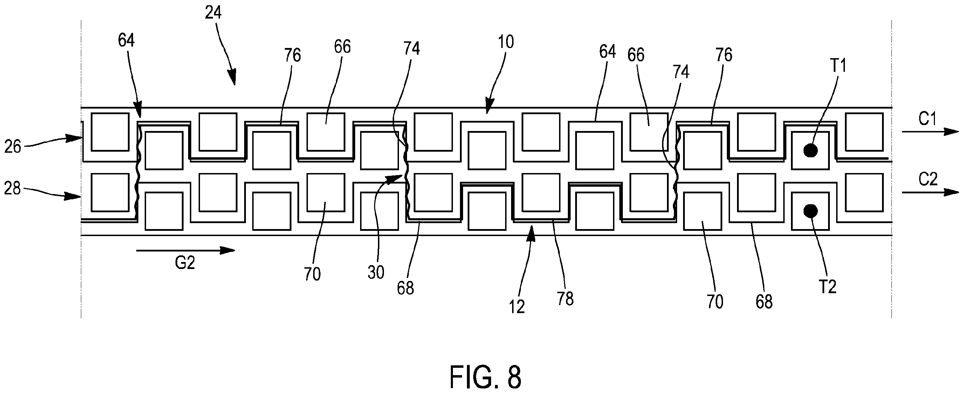

On va maintenant décrire, en référence aux figures 8 à 16, un procédé selon un premier mode de réalisation de l'invention permettant de fabriquer le pneumatique 20 selon le premier mode de réalisation décrit ci-dessus.

On dispose tout d'abord d'un assemblage 24 tel que représenté sur les figures 7 et 8.

L'assemblage 24 est alors tel que la première structure 10 de premiers éléments filaires est continue d'une part, selon la première direction générale et d'autre part, sur toute sa largeur V. L'assemblage 24 de la figure 7 est représenté dans le plan P-P' sur la figure 8.

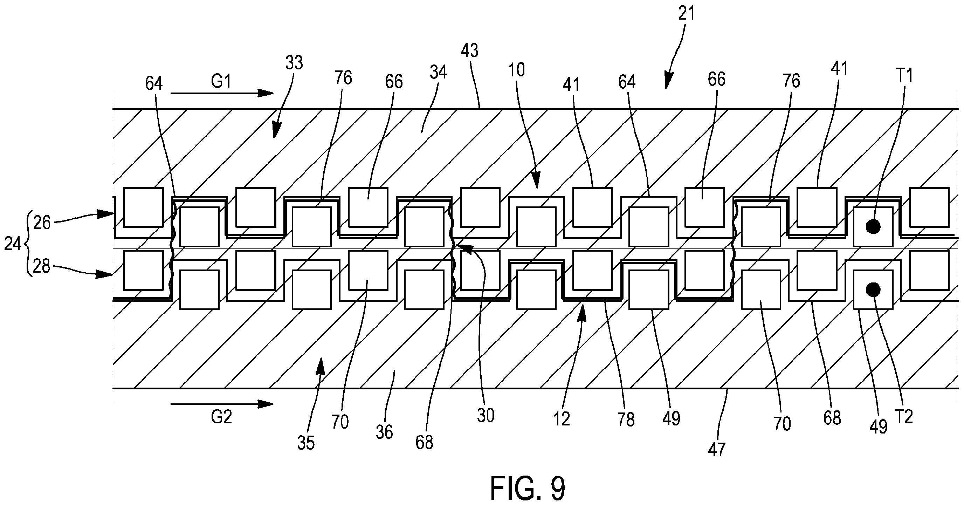

Puis, dans une étape d'imprégnation des premier et deuxième tissus 26, 28, on imprègne la première structure 10 de premiers éléments filaires et la deuxième structure 12 de deuxièmes éléments filaires, ici chaque premier et deuxième tissu 26, 28, respectivement par la première composition polymérique et la deuxième composition polymérique. Une telle étape d'imprégnation est réalisée par exemple par calandrage. On obtient alors l'assemblage imprégné 21 tel que représenté sur la figure 9 sur laquelle chaque première et deuxième structure 10, 12 imprégnée est au contact de l'autre.

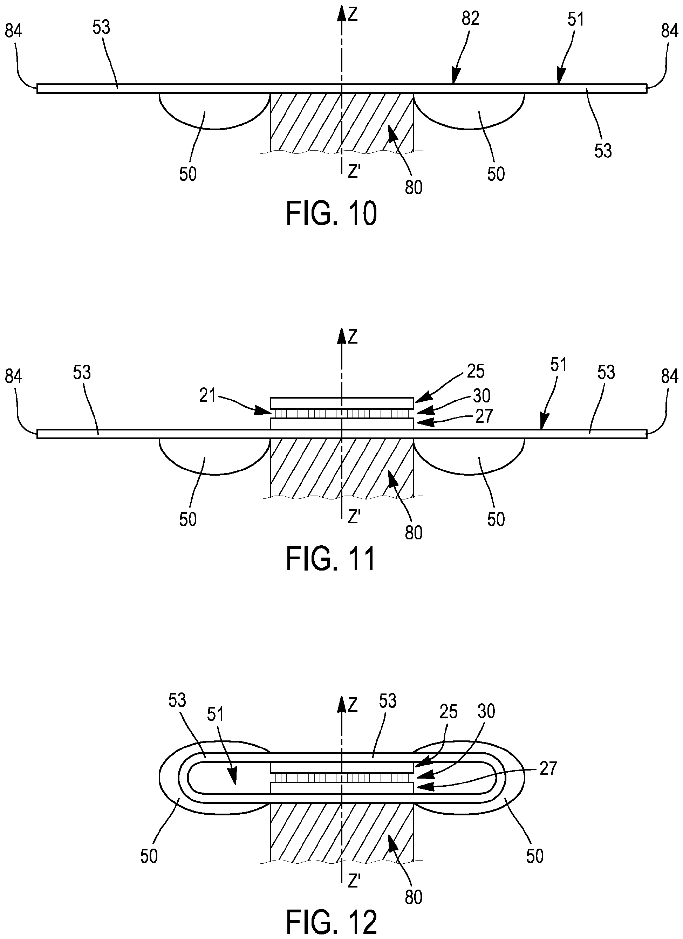

Comme illustré sur les figures 10 à 14, on dispose d'un support d'assemblage 80 dont le diamètre est égal à celui du moyen de montage sur lequel est destiné à être monté le pneumatique 20. Le support d'assemblage 80 est sensiblement de révolution autour d'un axe de révolution coaxial à l'axe de révolution YY' du pneumatique 20. On va maintenant décrire une étape d'assemblage d'une ébauche crue du pneumatique 10 en référence aux figures 10 à 14.

Tout d'abord, comme illustré sur la figure 10, on pose sur le support d'assemblage 80 un ensemble 82 comprenant la structure de révolution de carcasse 51 et les flancs 50.

Puis, comme illustré sur la figure 11, on enroule autour du support d'assemblage 80 l'assemblage imprégné 21 de la figure 11 selon la direction circonférentielle du support d'assemblage 80, ici sensiblement confondue avec la direction circonférentielle XX' du pneumatique 20, et de sorte que la première direction générale G1 et la direction circonférentielle du support d'assemblage 80 forme un angle inférieur ou égal à 10° et, dans ce premier mode de réalisation, un angle inférieur ou égal à 5°, de préférence un angle sensiblement nul.

Le pneumatique 20 est tel que la première direction de chaine C1 et la direction circonférentielle XX' du pneumatique 20 forment un angle non nul allant de 10° à 45° et ici égal à 38°. Pour obtenir un tel angle une fois le pneumatique fabriqué et comme cela est détaillé dans le document WO 2017/005713, lors de l'étape d'enroulage, on enroule l'assemblage de sorte que la première direction de chaine C1 et la direction circonférentielle XX' du support d'assemblage 80 forment un angle non nul et de préférence allant de 25° à 60° et ici égal à 45°.

On agence l'assemblage imprégné 21 radialement à l'extérieur de l'ensemble 82 préalablement posé.

A l'issue de cette étape d'enroulage, la première structure 10 de premiers éléments filaires et la deuxième structure 12 de deuxièmes éléments filaires forment respectivement la première structure de révolution 25 et la deuxième structure de révolution 27.

Dans ce premier mode de réalisation, on enroule l'assemblage imprégné 21 circonférentiellement sur au plus un tour complet autour de l'axe principal de façon à ce que la première structure de révolution 25 et donc la première structure 10 de premiers éléments filaires forme, lorsqu'on se déplace axialement d'un bord axial du support d'assemblage à l'autre bord axial du support d'assemblage, un enroulement cylindrique axialement continu de l'assemblage imprégné 21.

L'enroulement cylindrique axialement continu présente une largeur axiale supérieure ou égale à 50%, de préférence à 75% à la largeur axiale de la bande de roulement 58. Dans ce mode de réalisation, l'assemblage imprégné 21 est déposé selon un seul tour d'enroulement cylindrique. On parle alors de pose en pleine largeur, puisque la largeur axiale visée l'assemblage imprégné 21 est obtenue en un seul tour d'enroulement cylindrique. L'avantage d'une pose en pleine largeur est la productivité de fabrication. En revanche, une pose en pleine largeur implique nécessairement l'existence d'au moins une zone de recouvrement, ou soudure, selon la direction circonférentielle, entre les extrémités circonférentielles de l'assemblage imprégné 21, en particulier en fin d'enroulement.

Puis, comme illustré sur la figure 12, préalablement à une étape de formation de l'espace annulaire intérieur 52, dans le mode de réalisation décrit, on relie entre elles chaque extrémité axiale 44 de la première structure de révolution 25 et chaque extrémité axiale 48 de la deuxième structure de révolution 27 par un des flancs 50 de façon à constituer l'espace annulaire intérieur 52. On enroule également la structure de révolution de carcasse 51 radialement à l'extérieur de la première structure de révolution 25 en rabattant ici les deux extrémités axiales 84 de l'ensemble 82. On relie alors continûment chaque extrémité axiale 48 de la deuxième structure de révolution 27 par la structure de révolution de carcasse 51 qui s'étend radialement au travers de chaque flanc 50 et axialement sur toute la largeur axiale de la première structure de révolution 25. On obtient alors la configuration de l'assemblage illustré sur la figure 12. On obtient la cavité fermée 59 délimitée radialement ici d'une part, par la première structure 10 de premiers éléments filaires 64, 66 et, d'autre part, par la deuxième structure 12 de premiers éléments filaires 68, 70. La cavité 59 se trouve ici dans son état non pressurisé.

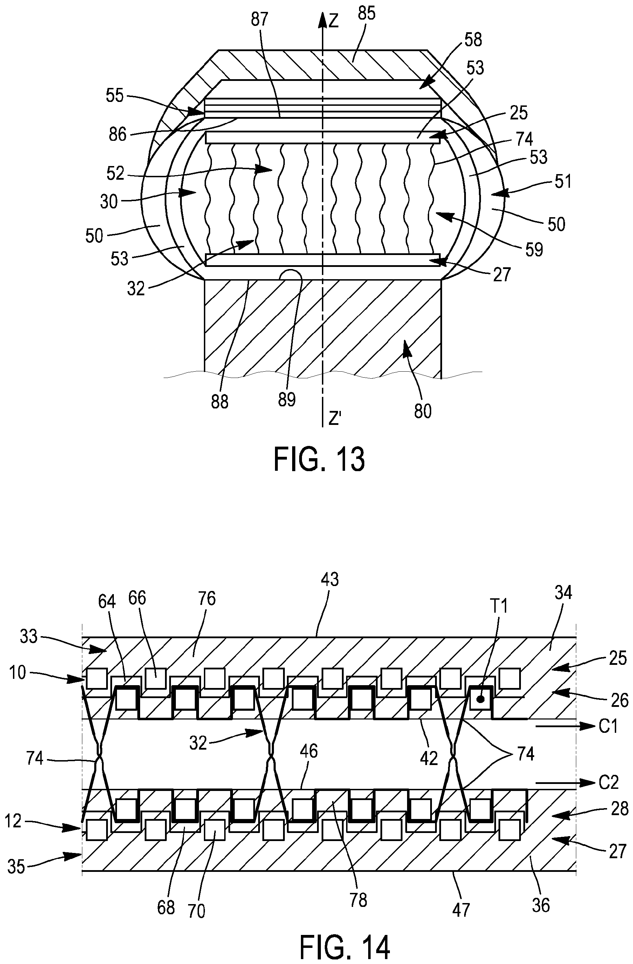

Puis en référence à la figure 13, l'étape d'assemblage comprend une étape durant laquelle on assemble la structure de révolution de sommet 55 et la bande de roulement 58 préalablement assemblées ensemble radialement à l'extérieur de la première structure de révolution 25. On utilise à cet effet un anneau de transfert 85 de la structure de révolution de sommet 55 et de la bande de roulement 58 sur l'ébauche crue préalablement formée.

Pour cela, on forme l'espace annulaire 52. Pour cela, on écarte radialement la première structure de révolution 25 par rapport à la deuxième structure de révolution 27 de façon à former l'espace annulaire intérieur 52 délimité radialement au moins en partie par la face interne 42 de la première structure de révolution 25 et au moins en partie par la face interne 46 de la deuxième structure de révolution 27. En l'espèce, on pressurise par un gaz de gonflage la cavité fermée 59 formée au moins en partie par l'espace annulaire intérieur 52 de façon à écarter radialement la première structure de révolution 25 par rapport à la deuxième structure de révolution 27.

Comme cela est visible sur les figures 13 et 14, on limite l'écartement radial de la première structure de révolution par rapport à la deuxième structure de révolution de sorte que la tension dans chaque portion filaire porteuse textile 74 est nulle lors de l'écartement radial de la première structure de révolution 25 par rapport à la deuxième structure de révolution 27. On limite l'écartement radial de la première structure de révolution 25 par rapport à la deuxième structure de révolution 27 en plaquant :
- une surface radialement externe 86 de l'ébauche crue préalablement formée contre une surface radialement interne 87 de la structure de révolution de sommet 55, et
- une surface radialement interne 88 de l'ébauche crue préalablement formée contre une surface radialement externe 89 du support d'assemblage 80 de l'ébauche crue.

A l'issue de l'étape d'assemblage, on dépressurise la cavité fermée 59 jusqu'à la pression atmosphérique ambiante. On notera que durant toute l'étape d'assemblage, la tension dans chaque portion filaire porteuse textile 74 est nulle.

On va maintenant décrire en référence aux figures 15 et 16, une étape de moulage de l'ébauche crue assemblée de la figure 13 durant laquelle on écarte à nouveau radialement la première structure 10 de premiers éléments filaires 64, 66 par rapport à la deuxième structure 12 de deuxièmes éléments filaires de façon à mouler les sculptures du pneumatique 20 au moyen d'un moule 90.

Durant cette étape de moulage, on pressurise la cavité fermée 59 formée au moins en partie par l'espace annulaire intérieur 52 de façon à écarter radialement la première structure de révolution 25 par rapport à la deuxième structure de révolution 27.

Comme cela est illustré sur la figure 16, on limite l'écartement radial de la première structure de révolution 25 par rapport à la deuxième structure de révolution 27 de sorte que la tension dans chaque portion filaire porteuse textile 74 est nulle. On limite l'écartement radial de la première structure de révolution 25 par rapport à la deuxième structure de révolution 27 en plaquant :
- une surface radialement externe 91 de l'ébauche crue préalablement formée contre une face intérieure radialement externe 92 du moule 90, et
- une surface radialement interne 93 de l'ébauche crue préalablement formée contre une face intérieure radialement interne 94 du moule 90.

Puis, le procédé comprend une étape de chauffage de l'ébauche crue moulée préalablement formée de façon à faire réticuler au moins en partie l'ébauche crue moulée du pneumatique 20 et ici de façon à obtenir le pneumatique à l'état réticulé ici à l'état cuit.

L'étape de chauffage utilise le même moule 90 que l'étape de moulage, le moule 90 ayant désormais la fonction de moule de réticulation en apportant, par exemple des calories, à l'ébauche crue préalablement formée afin de provoquer sa réticulation. Ainsi, la face intérieure radialement externe 92 du moule 90. La face intérieure radialement externe 92 du moule 90 permet l'appui radial de la bande de roulement 58, et la face intérieure radialement interne 94 permet l'appui radial de la deuxième structure de révolution 27.

Ainsi, comme illustré sur les figures 15 et 16 également représentatives de l'étape de chauffage, durant l'étape de chauffage, on pressurise la cavité fermée 59 formée au moins en partie par l'espace annulaire intérieur 52 de façon à écarter radialement la première structure de révolution 25 par rapport à la deuxième structure de révolution 27.

On limite l'écartement radial de la première structure de révolution 25 par rapport à la deuxième structure de révolution 27 de sorte que la tension dans chaque portion filaire porteuse textile 74 est nulle. On limite l'écartement radial de la première structure de révolution 25 par rapport à la deuxième structure de révolution 27 en plaquant la surface radialement externe 91 de l'ébauche crue préalablement formée contre la surface intérieure radialement externe 92 du moule de réticulation 90 et la surface radialement interne 93 de l'ébauche crue préalablement formée contre la surface intérieure radialement interne 94 du moule de réticulation 90.

Dans le mode de réalisation illustré, durant l'étape de chauffage, la longueur de chaque portion filaire porteuse textile 74 ne varie pas. Dans une variante dans laquelle chaque portion filaire porteuse textile 74 comprend au moins un matériau présentant une contraction thermique, la longueur de chaque portion filaire porteuse textile 74 diminue durant l'étape de chauffage de l'ébauche crue du pneumatique 20.

Dans les deux variantes, durant l'étape de chauffage de l'ébauche crue du pneumatique 20, chaque portion filaire porteuse textile 74 est dans un état plié, c'est-à-dire non rectiligne.

Durant l'étape de chauffage, la température la plus élevée atteinte par chaque élément filaire porteur textile 32 est dans un intervalle allant de 150°C à 180°C. La température de transition vitreuse de l'élasthanne utilisé est égale à -55°C qui est bien inférieure à la température la plus élevée atteinte par chaque élément filaire porteur textile 32 durant l'étape de chauffage de l'ébauche crue du pneumatique 20. En outre, l'élasthanne utilisé présente une température de dégradation au moins égale à 220°C et donc bien supérieure à l'intervalle allant de 150°C à 180°C.

Conformément à l'invention, durant l'étape de chauffage de l'ébauche crue moulée du pneumatique 20, la tension dans chaque portion filaire porteuse textile 74 est nulle.

A l'issue des étapes de moulage et de chauffage, on dépressurise la cavité fermée 59 jusqu'à la pression atmosphérique ambiante.

### PNEUMATIQUE ET PROCEDE SELON UN DEUXIEME MODE DE REALISATION DE L'INVENTION

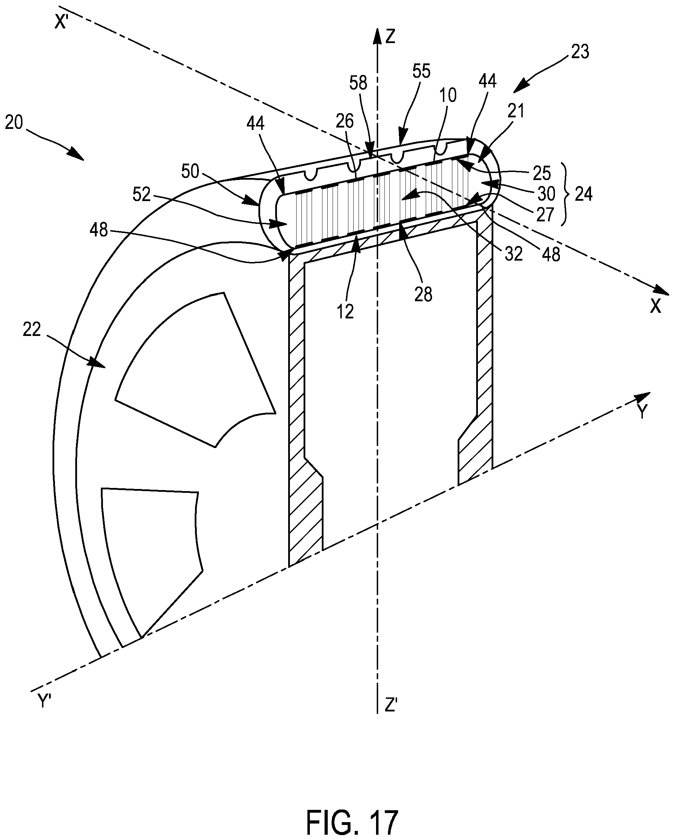

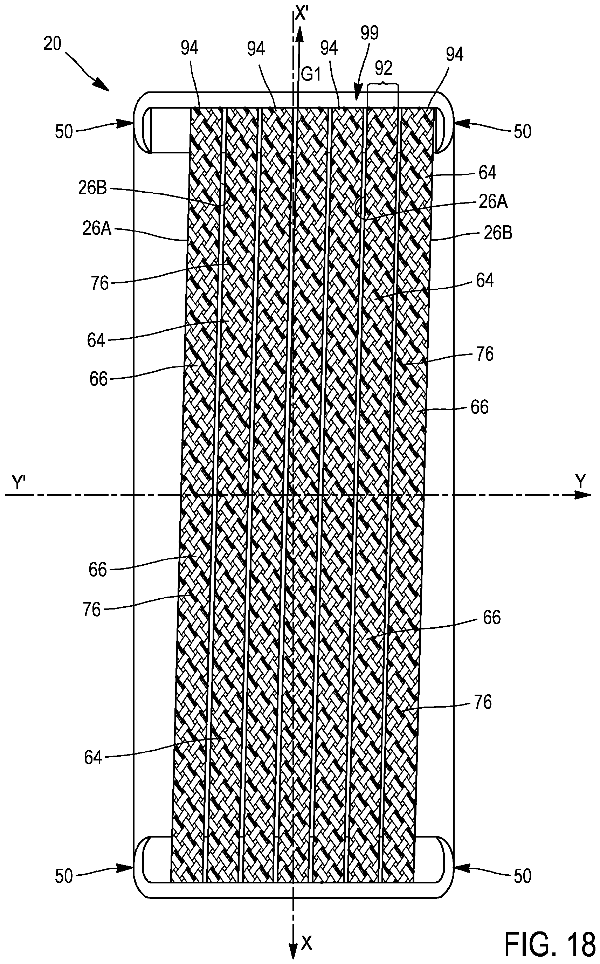

On a représenté sur les figures 17 et 18 un pneumatique 20 selon un deuxième mode de réalisation. Les éléments analogues à ceux représentés sur les figures précédentes sont désignés par des références identiques.

A la différence du pneumatique selon le premier mode de réalisation, dans le pneumatique 20 selon le deuxième mode de réalisation, la première direction générale G1 et la direction circonférentielle XX' du pneumatique 20 forment un angle sensiblement non nul inférieur ou égal à 10°, de préférence un angle sensiblement non nul inférieur ou égal à 5° et ici égal à 5°. Ainsi, lors de l'étape d'enroulage, on enroule l'assemblage de sorte que la première direction générale G1 et la direction circonférentielle XX' du support d'assemblage 80 forment également un angle sensiblement non nul inférieur à 10°, de préférence un angle sensiblement non nul inférieur ou égal à 5° et ici égal à 5°.

L'assemblage 24 s'étend circonférentiellement sur plusieurs tours complets autour de l'axe principal de façon à ce que la première structure de révolution 25 forme un enroulement hélicoïdal axialement discontinu de l'assemblage 24 entre les deux flancs 50 du pneumatique 20. Au cours du procédé, on enroule l'assemblage 24 circonférentiellement sur plusieurs tours complets autour de l'axe principal YY' du support d'assemblage 80 de façon à ce que la première structure de révolution 25 forme, lorsqu'on se déplace axialement d'un bord axial du support d'assemblage 80 à l'autre bord axial du support d'assemblage 80, un enroulement hélicoïdal axialement discontinu de l'assemblage 24.

Dans ce mode de réalisation, l'assemblage imprégné 21 est enroulé autour de l'axe du pneumatique 20 de façon à former l'enroulement hélicoïdal d'une bandelette d'assemblage 99, les portions axiales 94 de la bandelette 99 étant axialement juxtaposées. Par bandelette, on entend un assemblage imprégné 21 ayant une largeur axiale limitée, au plus égale à 30% de la largeur axiale de la bande de roulement 58, et de grande longueur au moins égale à deux fois la circonférence de la bande de roulement 58, de façon à ce que la bandelette à poser puisse être stockée sous forme de rouleau. Une telle bandelette est ainsi déroulée selon une hélice, ayant pour axe de révolution l'axe de révolution YY' du pneumatique 20. Le nombre de tours d'enroulement hélicoïdal de la bandelette est déterminé par la largeur axiale totale de l'enroulement hélicoïdal visée et par la densité d'éléments porteurs 32. La pose de la bandelette peut être jointive, c'est-dire que les portions de bandelette sont en contact deux à deux par leurs bords axiaux, ou non jointives, c'est-à-dire que les bords axiaux des portions axiales 94 de bandelette sont espacées d'un espace sensiblement non nul. L'avantage d'une pose en bandelette est l'absence de zones de recouvrement, ou soudures, selon la direction circonférentielle, entre des portions axiales de bandelette, en fin d'enroulement.

L'invention ne se limite pas aux modes de réalisation décrits ci-dessus, mais seulement par les revendications annexées.

On pourrait envisager une variante de chaque premier et deuxième mode de réalisation, dans lequel lors de l'étape d'enroulage, la première direction de chaine et la direction circonférentielle du support de confection forment un angle inférieur ou égal à 10°, de préférence inférieur ou égal à 5° et plus préférentiellement un angle sensiblement nul. Dans ces variantes, on utilise alors très préférentiellement les assemblages décrits dans les documents WO 2017/130782, WO 2017/130783 et WO 2017/130785.

En particulier, dans un mode de réalisation non décrit précédemment, on peut mettre en oeuvre un procédé avec un assemblage non imprégné, la jante 22 et la structure de révolution de sommet 55 assurant l'étanchéité radiale de l'espace annulaire intérieur 52.

En outre, on pourrait également mettre en oeuvre l'invention avec un tricot en remplacement d'un ou des tissus 26, 28.

## Revendications

1. Procédé de fabrication d'un pneumatique (20) comprenant :
- une étape d'assemblage d'une ébauche crue du pneumatique (20) durant laquelle on enroule, autour d'un support d'assemblage (80) sensiblement de révolution autour d'un axe de révolution (YY'), un assemblage (24) selon la direction circonférentielle (XX') du support d'assemblage (80), l'assemblage comprenant :
∘ une première structure (10) de premiers éléments filaires (64, 66),
∘ une deuxième structure (12) de deuxièmes éléments filaires (68, 70), la deuxième structure (12) de deuxièmes éléments filaires (68, 70) étant agencée radialement à l'intérieur de la première structure (10) de premiers éléments filaires (64, 66),
∘ une structure porteuse (30) comprenant des éléments filaires porteurs textiles (32) reliant la première structure de premiers éléments filaires (64, 66) et la deuxième structure (12) de deuxièmes éléments filaires (68, 70) entre elles, chaque élément filaire porteur textile (32) comprenant au moins une portion filaire porteuse textile (74) s'étendant entre la première structure de premiers éléments filaires (64, 66) et la deuxième structure (12) de deuxièmes éléments filaires (68, 70),
- une étape de moulage de l'ébauche crue assemblée du pneumatique (20) durant laquelle on écarte radialement la première structure (10) de premiers éléments filaires (64, 66) par rapport à la deuxième structure (12) de deuxièmes éléments filaires (68, 70), et
- une étape de chauffage de l'ébauche crue moulée du pneumatique (20) de façon à faire réticuler au moins en partie l'ébauche crue moulée du pneumatique (20), procédé **caractérisé en ce que,** durant l'étape de chauffage de l'ébauche crue moulée du pneumatique (20), la tension dans chaque portion filaire porteuse textile (74) est nulle.

2. Procédé selon la revendication 1, dans lequel la longueur de chaque portion filaire porteuse textile (74) ne varie pas durant l'étape de chauffage de l'ébauche crue du pneumatique (20).

3. Procédé selon la revendication 1, dans lequel la longueur de chaque portion filaire porteuse textile (74) diminue durant l'étape de chauffage de l'ébauche crue du pneumatique (20).

4. Procédé selon l'une quelconque des revendications précédentes, dans lequel, durant l'étape de chauffage de l'ébauche crue du pneumatique (20), chaque portion filaire porteuse textile (74) est dans un état plié.

5. Procédé selon l'une quelconque des revendications précédentes, dans lequel le pneumatique (20) est tel que, gonflé à une pression nominale (P) et écrasé sous une charge radiale nominale (Z_{N}) sur un sol, la portion filaire porteuse textile (74) d'au moins une partie de chaque élément filaire porteur textile (32) situé diamétralement à l'opposé de l'aire de contact, est dans un état tendu.

6. Procédé selon l'une quelconque des revendications précédentes, dans lequel, durant l'étape d'assemblage, la tension dans chaque portion filaire porteuse textile (74) est nulle.

7. Procédé selon l'une quelconque des revendications précédentes, dans lequel, durant l'étape d'assemblage, on forme un espace annulaire intérieur (52) délimité radialement au moins en partie par une face interne (42) d'une première structure de révolution (25) comprenant la première structure (10) de premiers éléments filaires (64, 66) et au moins en partie par une face interne (46) d'une deuxième structure de révolution (27) comprenant la deuxième structure (12) de deuxièmes éléments filaires (68, 70) en écartant radialement la première structure de révolution (25) par rapport à la deuxième structure de révolution (27) de sorte que la tension dans chaque portion filaire porteuse textile (74) est nulle lors de l'écartement radial de la première structure de révolution (25) par rapport à la deuxième structure de révolution (27).

8. Procédé selon la revendication précédente, dans lequel, durant l'étape d'assemblage:
- on pressurise une cavité fermée (59) formée au moins en partie par l'espace annulaire intérieur (52) de façon à écarter radialement la première structure de révolution (25) par rapport à la deuxième structure de révolution (27), et
- on limite l'écartement radial de la première structure de révolution (25) par rapport à la deuxième structure de révolution (27),
de sorte que la tension dans chaque portion filaire porteuse textile (74) est nulle.

9. Procédé selon la revendication 7 ou 8, durant l'étape de moulage:
- on pressurise une cavité fermée (59) formée au moins en partie par l'espace annulaire intérieur (52) de façon à écarter radialement la première structure de révolution (25) par rapport à la deuxième structure de révolution (27), et
- on limite l'écartement radial de la première structure de révolution (25) par rapport à la deuxième structure de révolution (27)
de sorte que la tension dans chaque portion filaire porteuse textile (74) est nulle.

10. Procédé selon l'une quelconque des revendications 7 à 9, dans lequel, durant l'étape de chauffage:
- on pressurise une cavité fermée (59) formée au moins en partie par l'espace annulaire intérieur (52) de façon à écarter radialement la première structure de révolution (25) par rapport à la deuxième structure de révolution (27), et
- on limite l'écartement radial de la première structure de révolution (25) par rapport à la deuxième structure de révolution (27),
de sorte que la tension dans chaque portion filaire porteuse textile (74) est nulle.

11. Procédé selon la revendication précédente, dans lequel, durant l'étape de chauffage, on limite l'écartement radial de la première structure de révolution (25) par rapport à la deuxième structure de révolution (27) en plaquant:
- une surface radialement externe de l'ébauche crue préalablement formée contre une surface intérieure radialement externe d'un moule de réticulation, et
- une surface radialement interne de l'ébauche crue préalablement formée contre une surface intérieure radialement interne du moule de réticulation.

12. Procédé selon la revendication précédente, dans lequel le pneumatique (20) comprenant une bande de roulement (58) agencée radialement à l'extérieur de la première structure de révolution (25), le moule de réticulation comprend :
- une face intérieure radialement externe d'appui radial de la bande de roulement (58), et
- une face intérieure radialement interne d'appui radial de la deuxième structure de révolution (27).

13. Procédé selon l'une quelconque des revendications précédentes, dans lequel chaque élément filaire porteur textile (32) est réalisé dans un matériau textile ou un assemblage de matériaux textiles, le ou chaque matériau textile présentant une température de fusion ou de dégradation thermique supérieure à la température la plus élevée atteinte par chaque élément filaire porteur textile (32) durant l'étape de chauffage de l'ébauche crue du pneumatique (20).

14. Procédé selon l'une quelconque des revendications précédentes, dans lequel chaque élément filaire porteur textile (32) est réalisé dans un matériau textile ou un assemblage de matériaux textiles, le ou chaque matériau textile présentant une température de transition vitreuse inférieure à la température la plus élevée atteinte par chaque élément filaire porteur textile (32) durant l'étape de chauffage de l'ébauche crue du pneumatique (20).

15. Procédé selon l'une quelconque des revendications précédentes, dans lequel le ou chaque matériau textile est choisi parmi un polyester, un polyamide, une polycétone, un polyuréthanne, un alcool polyvinylique, une cellulose, un une fibre minérale, une fibre naturelle.

## Patentansprüche

1. Verfahren zur Herstellung eines Reifens (20), welches umfasst:
- einen Schritt der Konfektionierung eines Rohlings des Reifens (20), in welchem um einen Montageträger (80), der im Wesentlichen rotationssymmetrisch um eine Rotationsache (YY') ist, eine Anordnung (24) in der Umfangsrichtung (XX') des Montageträgers (80) gewickelt wird, wobei die Anordnung umfasst
o eine erste Struktur (10) von ersten fadenförmigen Elementen (64, 66),
o eine zweite Struktur (12) von zweiten fadenförmigen Elementen (68, 70), wobei die zweite Struktur (12) von zweiten fadenförmigen Elementen (68, 70) radial innerhalb der ersten Struktur (10) von ersten fadenförmigen Elementen (64, 66) angeordnet ist,
o eine tragende Struktur (30), die textile fadenförmige Tragelemente (32) umfasst, welche die erste Struktur (10) von ersten fadenförmigen Elementen (64, 66) und die zweite Struktur (12) von zweiten fadenförmigen Elementen (68, 70) miteinander verbinden, wobei jedes textile fadenförmige Tragelement (32) wenigstens einen textilen fadenförmigen Tragabschnitt (74) umfasst, der sich zwischen der ersten Struktur (10) von ersten fadenförmigen Elementen (64, 66) und der zweiten Struktur (12) von zweiten fadenförmigen Elementen (68, 70) erstreckt,
- einen Schritt der Formung des konfektionierten Rohlings des Reifens (20), in welchem die erste Struktur (10) von ersten fadenförmigen Elementen (64, 66) in Bezug auf die zweite Struktur (12) von zweiten fadenförmigen Elementen (68, 70) radial entfernt wird, und
- einen Schritt der Erwärmung des geformten Rohlings des Reifens (20), um den geformten Rohling des Reifens (20) wenigstens teilweise zu vernetzen,
wobei das Verfahren **dadurch gekennzeichnet ist, dass** im Schritt der Erwärmung des geformten Rohlings des Reifens (20) die Spannung in jedem textilen fadenförmigen Tragabschnitt (74) null beträgt.

2. Verfahren nach Anspruch 1, wobei sich die Länge jedes textilen fadenförmigen Tragabschnitts (74) im Schritt der Erwärmung des Rohlings des Reifens (20) nicht ändert.

3. Verfahren nach Anspruch 1, wobei sich die Länge jedes textilen fadenförmigen Tragabschnitts (74) im Schritt der Erwärmung des Rohlings des Reifens (20) verringert.

4. Verfahren nach einem der vorhergehenden Ansprüche, wobei sich im Schritt der Erwärmung des Rohlings des Reifens (20) jeder textile fadenförmige Tragabschnitt (74) in einem gefalteten Zustand befindet.

5. Verfahren nach einem der vorhergehenden Ansprüche, wobei der Reifen (20) so beschaffen ist, dass, wenn er auf einen Nenndruck (P) aufgepumpt ist und unter einer radialen Nennlast (Z_{N}) auf einen Boden gedrückt wird, der textile fadenförmige Tragabschnitt (74) wenigstens eines Teils jedes textilen fadenförmigen Tragelements (32), das der Aufstandsfläche diametral gegenüberliegt, sich in einem gespannten Zustand befindet.

6. Verfahren nach einem der vorhergehenden Ansprüche, wobei im Schritt der Konfektionierung die Spannung in jedem textilen fadenförmigen Tragabschnitt (74) null beträgt.

7. Verfahren nach einem der vorhergehenden Ansprüche, wobei im Schritt der Konfektionierung ein innerer Ringraum (52) gebildet wird, der radial wenigstens teilweise von einer Innenseite (42) einer ersten Rotationsstruktur (25), welche die erste Struktur (10) von ersten fadenförmigen Elementen (64, 66) umfasst, und wenigstens teilweise von einer Innenseite (46) einer zweiten Rotationsstruktur (27), welche die zweite Struktur (12) von zweiten fadenförmigen Elementen (68, 70) umfasst, begrenzt wird, indem die erste Rotationsstruktur (25) in Bezug auf die zweite Rotationsstruktur (27) radial entfernt wird, derart, dass die Spannung in jedem textilen fadenförmigen Tragabschnitt (74) beim radialen Entfernen der ersten Rotationsstruktur (25) in Bezug auf die zweite Rotationsstruktur (27) null beträgt.

8. Verfahren nach dem vorhergehenden Anspruch, wobei im Schritt der Konfektionierung:
- ein geschlossener Hohlraum (59), der wenigstens teilweise von dem inneren Ringraum (52) gebildet wird, mit Druck beaufschlagt wird, um so die erste Rotationsstruktur (25) in Bezug auf die zweite Rotationsstruktur (27) radial zu entfernen, und
- der radiale Abstand der ersten Rotationsstruktur (25) in Bezug auf die zweite Rotationsstruktur (27) begrenzt wird,
derart, dass die Spannung in jedem textilen fadenförmigen Tragabschnitt (74) null beträgt.

9. Verfahren nach Anspruch 7 oder 8, wobei im Schritt der Formung:
- ein geschlossener Hohlraum (59), der wenigstens teilweise von dem inneren Ringraum (52) gebildet wird, mit Druck beaufschlagt wird, um so die erste Rotationsstruktur (25) in Bezug auf die zweite Rotationsstruktur (27) radial zu entfernen, und
- der radiale Abstand der ersten Rotationsstruktur (25) in Bezug auf die zweite Rotationsstruktur (27) begrenzt wird,
derart, dass die Spannung in jedem textilen fadenförmigen Tragabschnitt (74) null beträgt.

10. Verfahren nach einem der Ansprüche 7 bis 9, wobei im Schritt der Erwärmung:
- ein geschlossener Hohlraum (59), der wenigstens teilweise von dem inneren Ringraum (52) gebildet wird, mit Druck beaufschlagt wird, um so die erste Rotationsstruktur (25) in Bezug auf die zweite Rotationsstruktur (27) radial zu entfernen, und
- der radiale Abstand der ersten Rotationsstruktur (25) in Bezug auf die zweite Rotationsstruktur (27) begrenzt wird,
derart, dass die Spannung in jedem textilen fadenförmigen Tragabschnitt (74) null beträgt.

11. Verfahren nach dem vorhergehenden Anspruch, wobei im Schritt der Erwärmung der radiale Abstand der ersten Rotationsstruktur (25) in Bezug auf die zweite Rotationsstruktur (27) begrenzt wird, indem gepresst wird:
- eine radial äußere Fläche des zuvor geformten Rohlings gegen eine radial äußere Innenfläche einer Vernetzungsform, und
- eine radial innere Fläche des zuvor geformten Rohlings gegen eine radial innere Innenfläche der Vernetzungsform.

12. Verfahren nach dem vorhergehenden Anspruch, wobei, wenn der Reifen (20) einen Laufstreifen (58) umfasst, der radial außerhalb der ersten Rotationsstruktur (25) angeordnet ist, die Vernetzungsform umfasst:
- eine radial äußere Innenseite zur radialen Abstützung des Laufstreifens (58), und
- eine radial innere Innenseite zur radialen Abstützung der zweiten Rotationsstruktur (27).

13. Verfahren nach einem der vorhergehenden Ansprüche, wobei jedes textile fadenförmige Tragelement (32) aus einem textilen Material oder einer Anordnung von textilen Materialien hergestellt ist, wobei das oder jedes textile Material eine Schmelztemperatur oder Temperatur der thermischen Zersetzung aufweist, die höher als die höchste Temperatur ist, die von jedem textilen fadenförmigen Tragelement (32) im Schritt der Erwärmung des Rohlings des Reifens (20) erreicht wird.

14. Verfahren nach einem der vorhergehenden Ansprüche, wobei jedes textile fadenförmige Tragelement (32) aus einem textilen Material oder einer Anordnung von textilen Materialien hergestellt ist, wobei das oder jedes textile Material eine Glasübergangstemperatur aufweist, die niedriger als die höchste Temperatur ist, die von jedem textilen fadenförmigen Tragelement (32) im Schritt der Erwärmung des Rohlings des Reifens (20) erreicht wird.

15. Verfahren nach einem der vorhergehenden Ansprüche, wobei das oder jedes textile Material aus einem Polyester, einem Polyamid, einem Polyketon, einem Polyurethan, einem Polyvinylalkohol, einer Cellulose, einer Mineralfaser und einer Naturfaser ausgewählt ist.

## Claims

1. Method for manufacturing a tyre (20), comprising:
- a step of assembling a green form of the tyre (20) during which an assembly (24) is wound, around an assembly support (80) that substantially exhibits symmetry of revolution about an axis of revolution (YY'), in the circumferential direction (XX') of the assembly support (80), the assembly comprising:
o a first structure (10) of first filamentary elements (64, 66),
o a second structure (12) of second filamentary elements (68, 70), the second structure (12) of second filamentary elements (68, 70) being arranged radially on the inside of the first structure (10) of first filamentary elements (64, 66),
o a bearing structure (30) comprising textile bearing filamentary elements (32) connecting the first structure of first filamentary elements (64, 66) and the second structure (12) of second filamentary elements (68, 70) to each other, each textile bearing filamentary element (32) comprising at least one textile bearing filamentary portion (74) extending between the first structure of first filamentary elements (64, 66) and the second structure (12) of second filamentary elements (68, 70),
- a step of moulding the assembled green form of the tyre (20) during which the first structure (10) of first filamentary elements (64, 66) is moved radially away from the second structure (12) of second filamentary elements (68, 70), and
- a step of heating the moulded green form of the tyre (20) so as to at least partially crosslink the moulded green form of the tyre (20),
which method is **characterized in that,** during the step of heating the moulded green form of the tyre (20), the tension in each textile bearing filamentary portion (74) is zero.

2. Method according to Claim 1, wherein the length of each textile bearing filamentary portion (74) does not vary during the step of heating the green form of the tyre (20).

3. Method according to Claim 1, wherein the length of each textile bearing filamentary portion (74) decreases during the step of heating the green form of the tyre (20) .

4. Method according to any one of the preceding claims, wherein, during the step of heating the green form of the tyre (20), each textile bearing filamentary portion (74) is in a folded state.

5. Method according to any one of the preceding claims, wherein the tyre (20) is such that, when said tyre is inflated to a nominal pressure (P) and compressed under a nominal radial load (Z_{N}) on the ground, the textile bearing filamentary portion (74) of at least a part of each textile bearing filamentary element (32) situated diametrically opposite the contact patch, is in a tensioned state.

6. Method according to any one of the preceding claims, wherein, during the assembly step, the tension in each textile bearing filamentary portion (74) is zero.

7. Method according to any one of the preceding claims, wherein, during the assembly step, an inner annular space (52) delimited radially at least partially by an internal face (42) of a first structure of revolution (25) comprising the first structure (10) of first filamentary elements (64, 66) and at least partially by an internal face (46) of a second structure of revolution (27) comprising the second structure (12) of second filamentary elements (68, 70) is formed by moving the first structure of revolution (25) radially away from the second structure of revolution (27) such that the tension in each textile bearing filamentary portion (74) is zero during the movement of the first structure of revolution (25) radially away from the second structure of revolution (27).

8. Method according to the preceding claim, wherein, during the assembly step:
- a closed cavity (59) formed at least partially by the inner annular space (52) is pressurized so as to move the first structure of revolution (25) radially away from the second structure of revolution (27), and
- the movement of the first structure of revolution (25) radially away from the second structure of revolution (27) is limited,
such that the tension in each textile bearing filamentary portion (74) is zero.

9. Method according to Claim 7 or 8, wherein, during the moulding step:
- a closed cavity (59) formed at least partially by the inner annular space (52) is pressurized so as to move the first structure of revolution (25) radially away from the second structure of revolution (27), and
- the movement of the first structure of revolution (25) radially away from the second structure of revolution (27) is limited,
such that the tension in each textile bearing filamentary portion (74) is zero.

10. Method according to any one of Claims 7 to 9, wherein, during the heating step:
- a closed cavity (59) formed at least partially by the inner annular space (52) is pressurized so as to move the first structure of revolution (25) radially away from the second structure of revolution (27), and
- the movement of the first structure of revolution (25) radially away from the second structure of revolution (27) is limited,
such that the tension in each textile bearing filamentary portion (74) is zero.

11. Method according to the preceding claim, wherein, during the heating step, the movement of the first structure of revolution (25) radially away from the second structure of revolution (27) is limited by pressing:
- a radially external surface of the previously-formed green form against a radially external inner surface of a crosslinking mould, and
- a radially internal surface of the previously-formed green form against a radially internal inner surface of the crosslinking mould.

12. Method according to the preceding claim, wherein, the tyre (20) comprising a tread (58) arranged radially on the outside of the first structure of revolution (25), the crosslinking mould comprises:
- a radially external inner face for radial support of the tread (58), and
- a radially internal inner face for radial support of the second structure of revolution (27).

13. Method according to any one of the preceding claims, wherein each textile bearing filamentary element (32) is made of a textile material or an assembly of textile materials, the or each textile material having a melting or thermal degradation temperature higher than the highest temperature reached by each textile bearing filamentary element (32) during the step of heating the green form of the tyre (20).

14. Method according to any one of the preceding claims, wherein each textile bearing filamentary element (32) is made of a textile material or an assembly of textile materials, the or each textile material having a glass transition temperature lower than the highest temperature reached by each textile bearing filamentary element (32) during the step of heating the green form of the tyre (20) .

15. Method according to any one of the preceding claims, wherein the or each textile material is chosen from a polyester, a polyamide, a polyketone, a polyurethane, a polyvinyl alcohol, a cellulose, a mineral fibre, a natural fibre.
